# EUROPEAN PATENT APPLICATION

(11) **EP 4 757 216 A1**
(43) Date of publication of application: **10.06.2026**
(21) Application number: 24853192.3
(22) Date of filing: 26.03.2024
(51) Int. Cl.: H04L 1/00

(54) **METHOD FOR SENDING CHANNEL STATE INFORMATION, METHOD FOR RECEIVING CHANNEL STATE INFORMATION, COMMUNICATION APPARATUS, AND STORAGE MEDIUM**

(30) Priority: 11.08.2023 CN 202311019175
(71) Applicant: ZTE Corporation, Shenzhen, Guangdong 518057 (CN)
(72) Inventor: XIAO, Huahua, Shenzhen, Guangdong 518057 (CN); LU, Zhaohua, Shenzhen, Guangdong 518057 (CN); LIU, Wenfeng, Shenzhen, Guangdong 518057 (CN); ZHENG, Guozeng, Shenzhen, Guangdong 518057 (CN); CAO, Hua, Shenzhen, Guangdong 518057 (CN)
(74) Representative: Ziebig Hengelhaupt Intellectual Property Attorneys Patentanwaltskanzlei PartGmbB
(86) International application number: PCT/CN2024/083903
(87) International publication number: WO 2025/035776

(57) **Abstract**

Provided are a method for sending channel state information, a method for receiving channel state information, a communication apparatus, and a storage medium. The method for sending channel state information comprises: acquiring L groups of channel state information, L being a positive integer, on the basis of the L groups of channel state information, generating a channel state information report; and sending the channel state information report.

## Description

This application claims priority of Chinese Patent Application No. 202311019175.2, filed on August 11, 2023, which is incorporated into this application by reference in its entirety.

### TECHNICAL FIELD

The present disclosure relates to the field of communication technologies, and in particular, to a channel state information sending method, a channel state information receiving method, a communication device, and a storage medium.

### BACKGROUND

Currently, multi-antenna technologies have been widely used for a variety of radio communication technologies, such as the long term evolution (LTE) mobile communication network of 4th generation mobile communication technology (4G) and the new radio (NR) mobile communication network of 5th generation mobile communication technology (5G). The multi-antenna technologies have also received widespread attention and been studied in the future 6th generation mobile communication technology (6G). In the multi-antenna technologies for radio communication systems, it is crucial for communication nodes to obtain accurate channel information.

### SUMMARY

In an aspect, a channel state information sending method is provided in the present disclosure. The channel state information sending method includes:
acquiring L groups of channel state information, L being a positive integer;
generating a channel state information report based on the L groups of channel state information; and
sending the channel state information report.

In another aspect, a channel state information receiving method is provided in the present disclosure. The channel state information receiving method includes:
receiving a channel state information report, the channel state information report being generated based on L groups of channel state information, and L is a positive integer.

In yet another aspect, a communication device is provided in the present disclosure. The communication device includes:
a receiving module, configured to acquire L groups of channel state information, L being a positive integer;
a processing module, configured to generate a channel state information report based on the L groups of channel state information; and
a sending module, configured to send the channel state information report.

In yet another aspect, another communication device is provided in the present disclosure. The communication device includes:
a receiving module, configured to receive a channel state information report, the channel state information report being generated based on L groups of channel state information, and L being a positive integer.

In yet another aspect, a communication device is provided. The communication device includes a processor and a memory. The memory stores instructions executable by the processor. The processor is configured to, upon executing the instructions, enable the communication device to perform the method described in any one of the aspects described above.

In yet another aspect, a computer readable storage medium is provided. The computer readable storage medium has stored computer instructions that, upon run on a computer, enable the computer to perform the method described in any one of the aspects described above.

In yet another aspect, a computer program product including computer instructions is provided. When the computer instructions are run on a computer, the computer is enabled to perform the method described in any one of the aspects described above.

### BRIEF DESCRIPTION OF THE DRAWINGS

The accompanying drawings are used for a further understanding of the technical solutions of the present disclosure, constitute a part of the specification, are used to explain the technical solutions of the present disclosure together with the embodiments of the present disclosure, and do not limit the technical solutions of the present disclosure.
FIG. 1 is a schematic diagram showing an architecture of a communication system, in accordance with some embodiments of the present disclosure;
FIG. 2 is a flow chart of a channel state information sending method, in accordance with some embodiments of the present disclosure;
FIG. 3 is a flow chart of another channel state information sending method, in accordance with some embodiments of the present disclosure;
FIG. 4 is a flow chart of yet another channel state information sending method, in accordance with some embodiments of the present disclosure;
FIG. 5 is a flow chart of a channel state information receiving method, in accordance with some embodiments of the present disclosure;
FIG. 6 is a schematic diagram of components of a communication device, in accordance with some embodiments of the present disclosure;
FIG. 7 is a schematic diagram of components of another communication device, in accordance with some embodiments of the present disclosure; and
FIG. 8 is a schematic diagram showing a structure of a communication device, in accordance with some embodiments of the present disclosure.

### DETAILED DESCRIPTION

In order to enable those skilled in the art to better understand technical solutions in embodiments of the present disclosure, the technical solutions in the embodiments of the present disclosure will be described clearly and completely with reference to the accompanying drawings in the embodiments of the present disclosure. However, the described embodiments are merely some but not all of embodiments of the present disclosure. All other embodiments obtained based on the embodiments of the present disclosure by a person of ordinary skill in the art without paying any creative effort shall be included in the protection scope of the present disclosure.

In the description of the present disclosure, unless otherwise specified, the symbol "/" means "or", for example, "A/B" may mean A or B. Herein, "and/or" is merely an associated relationship for describing associated objects, which means that there may be three relationships. For example, A and/or B may mean: only A, only B, and A and B at the same time. In addition, the term such as "at least one" means one or more, and the term such as "a/the plurality of" means two or more. The words, such as "first" and "second", do not limit the number and execution order, and do not necessarily limit existence of a difference between a first item and a second item.

It will be noted that, in the present disclosure, the term such as "exemplary" or "for example" is used to represent an example, illustration, or explanation. Any embodiment or design solution described herein with "exemplary" or "for example" in the present disclosure is not necessarily to be construed as preferred or advantageous over other embodiments or design solutions. Rather, the use of the term such as "exemplary" or "for example" is intended to present relevant concepts in a specific manner.

Multi-antenna technologies include a multiple-input-multiple-output (MIMO) technology, a joint transmission (JT) technology of multiple transmission nodes, and a high-frequency beamforming technology. In high-frequency transmission, the beamforming technology is required due to the high carrier frequency and large path loss, so as to concentrate and propagate energy towards the terminal, and a beam management technology is also required. The beam management includes, but is not limited to, beam sweeping, beam tracking, and beam recovery. The beam sweeping includes transmitting end beam sweeping and/or receiving end beam sweeping. In practical implementation, channel state information may be obtained by using advanced information processing technologies, such as artificial intelligence or other advanced linear and nonlinear information processing technologies. For example, the channel state information is estimated based on artificial intelligence, channel prediction is performed based on artificial intelligence, the channel state information is compressed based on artificial intelligence, the channel state information is decompressed based on artificial intelligence, and a beam prediction technology is based on artificial intelligence. In a case where the channel state information is obtained by using advanced technologies, information processing may have different outputs due to a variety of different uses or scenarios, as well as different subjects performing information processing, which causes a significant variation in a transmission size of channel state information. However, the current channel information feedback has a low flexibility and cannot meet the requirement for flexible transmission of channel state information.

The technical solutions provided in the embodiments of the present disclosure may be applied to a variety of mobile communication networks, such as new radio (NR) mobile communication networks using the 5th generation mobile communication technology (5G), future mobile communication networks (for example, including but not limited to the 6th generation mobile communication technology (6G)), or a plurality of communication convergence systems, and the embodiments of the present disclosure are not limited thereto.

A network architecture of a mobile communication network (including but not limited to 3G, 4G, 5G and future mobile communication networks) in the embodiments of the present disclosure may include a network-side device (for example, including but not limited to a base station) and a receiving-side device (for example, including but not limited to a terminal). Moreover, it will be understood that, in this example, in a downlink, a first communication node (also referred to as a first communication node device) may be a base station side device, and a second communication node (also referred to as a second communication node device) may be a terminal side device. Of course, in an uplink, the first communication node may also be a terminal side device, and the second communication node may also be a base station side device. In a case where two communication nodes are in a device-to-device communication, both the first communication node and the second communication node may be base stations or terminals. The first communication node and the second communication node may be referred to as a first node and a second node for short, respectively.

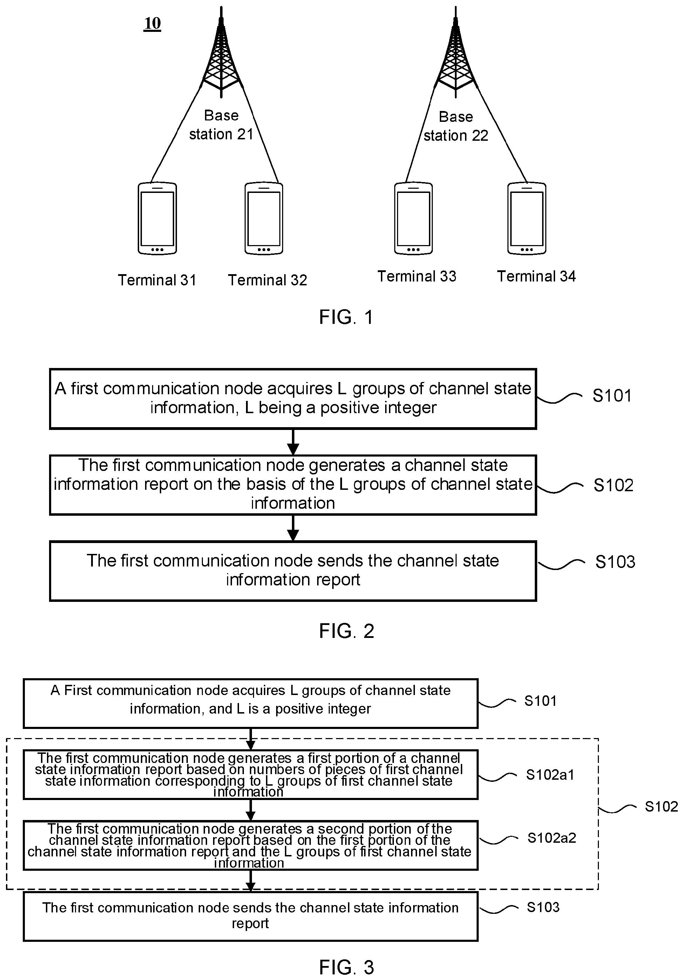

For example, in an example where the network-side device is the base station and the receiving-side device is the terminal, FIG. 1 is a schematic diagram showing an architecture of a communication system provided in the embodiments of the present disclosure. As shown in FIG. 1, the communication system 10 includes a plurality of base stations (e.g., a base station 21 and a base station 22) and a plurality of terminals (e.g., a terminal 31, a terminal 32, a terminal 33, and a terminal 34). The plurality of base stations and the plurality of terminals may be in communication connection. A base station may provide network services to terminals in a cell, and may further provide network services to terminals in a plurality of cells at the same time.

In some embodiments, the base station may be a base station or an evolutional base station (e.g., an evolutional node B (eNB or eNodeB)) in long term evolution (LTE), long term evolution advanced (LTE-A), a base station device in a 5G network, or a base station in a future communication system, etc. The base station may include a variety of macro base stations, micro base stations, home base stations, wireless remote devices, reconfigurable intelligent surfaces (RISs), routers, wireless fidelity (WIFI) devices, or a variety of network-side devices such as primary cells and secondary cells.

In some embodiments, the terminal may be a device with a wireless transceiving function. The terminal may be deployed on land, which includes indoor or outdoor, handheld, wearable or vehicle-mounted. The terminal may also be deployed on water (e.g., on a ship). The terminal may also be deployed in the air (e.g., on an airplane, on a balloon and on a satellite). The terminal may be a mobile phone, a tablet computer (pad), a computer with a wireless transceiving function, a virtual reality (VR) terminal, an augmented reality (AR) terminal, a wireless terminal in an industrial control system, a wireless terminal in a self driving system, a wireless terminal in a remote medical system, a wireless terminal in a smart grid, a wireless terminal in a transportation safety system, a wireless terminal in a smart city, a wireless terminal in a smart home, etc. The embodiments of the present disclosure do not limit the application scenarios. The terminal may sometimes also be referred to as a user, user equipment (UE), an access terminal, a UE unit, a UE station, a mobile station, a mobile radio station, a remote station, a remote terminal, a mobile device, a UE terminal, a wireless communication device, a UE agent, a UE device, etc., and the embodiments of the present disclosure are not limited thereto.

In some embodiments, a higher layer signaling includes, but is not limited to a radio resource control (RRC) signaling, a media access control control element (MAC CE) signaling, and other signalings above the physical layer signaling, such as an LTE positioning protocol (LPP) higher layer signaling, an NR positioning protocol A (NRPPa) higher layer signaling, an LTE positioning protocol A (LPPa) higher layer signaling, and the LPP is also applied to an NR positioning protocol. The physical layer signaling may also be transmitted between the base station and the terminal. For example, the physical layer signaling may be transmitted between the base station and the terminal on a physical downlink control channel (PDCCH) and on a physical uplink control channel (PUCCH).

In some embodiments, an indicator of a parameter may also be referred to as an index or an identifier (ID), and the concepts of indicator, identifier and index are equivalent. For example, a resource identifier of a wireless system may also be referred to as a resource indicator or a resource index. The resource index of the wireless system includes, but is not limited to one of the following: indexes corresponding to a reference signal resource, a reference signal resource group, a reference signal resource configuration, a channel state information (CSI) report, a CSI report set, a terminal, a base station, a panel, a neural network, a sub-neural network, a neural network layer, a precoding matrix, a beam, a transmission mode, a sending mode, a receiving mode, a module, a model, a functional module, a function, etc. The base station may indicate an identifier of a resource or a group of resources to the terminal through a variety of higher layer signalings or physical layer signalings. The terminal may also feed back an identifier of a resource or a group of resources to the base station through a variety of higher layer signalings and/or physical layer signalings.

In some embodiments, a slot may include: a slot or a mini slot. A slot or a mini slot includes at least one symbol. A symbol refers to a time unit for a subframe or a frame or a slot. For example, a symbol may be an orthogonal frequency division multiplexing (OFDM) symbol, a single-carrier frequency division multiple access (SC-FDMA) symbol, or an orthogonal frequency division multiple access (OFDMA) symbol.

In some embodiments, transmission includes sending or reception. For example, the transmission includes sending of data or signals, and reception of data or signals.

In some embodiments, in order to calculate channel state information or perform channel estimation, mobility management, positioning, etc., the base station or the terminal needs to send a reference signal (RS). The reference signal includes, but is not limited to a channel-state information reference signal (CSI-RS). The CSI-RS includes a zero power CSI-RS (ZP CSI-RS) and a non-zero power CSI-RS (NZP CSI-RS), a channel-state information-interference measurement (CSI-IM) signal, a sounding reference signal (SRS), a synchronization signal block (SSB), a physical broadcast channel (PBCH), a synchronization signal block/physical broadcast channel (SSB/PBCH). The CSI-RS may be used for tracking, which is referred to as a tracking reference signal (e.g., a CSI-RS for Tracking, TRS). The NZP CSI-RS may also be used to measure a channel or interference. The CSI-IM is generally used to measure interference, and the SRS is used to measure an uplink channel. In addition, a set of resource elements (RE) included in a time-frequency resource for transmitting a reference signal is referred to as a reference signal resource, for example, a CSI-RS resource, an SRS resource, a CSI-IM resource, and an SSB resource. In the document, the SSB includes a synchronization signal block and/or a physical broadcast channel.

In some embodiments, a beam includes a sending beam, a receiving beam, a pair of a receiving beam and a sending beam and a pair of a sending beam and a receiving beam. In some embodiments, a beam may be understood as a kind of resource, for example, a reference signal resource, a transmitting end spatial filter, a receiving end spatial filter, a spatial filter, a spatial receiving parameter, a transmitting end precoding, a receiving end precoding, an antenna port, an antenna weight vector, or an antenna weight matrix. A beam index may be replaced by a resource index (e.g., a reference signal resource index), as the beam may be bundled with at least one of a time domain resource, a frequency domain resource, or a code domain resource for transmission. A beam may also be a transmission (sending/receiving) mode, and the transmission mode may include space division multiplexing, frequency domain/time domain diversity, beamforming, etc. In addition, the base station may perform quasi co-location (QCL) configuration for two reference signals and inform a user end of the QCL configuration, so that the user end describes the channel characteristic. Parameters involved in the quasi co-location at least include: Doppler spread, Doppler shift, delay spread, average delay, average gain and spatial parameter (e.g., spatial Rx parameter, or spatial parameter). The spatial parameter may include spatial reception (Rx) parameters, angle information, spatial correlation parameters of a receiving beam, an average delay, and correlation parameters of time-frequency channel response (including phase information). The angle information may include at least one of: an angle of arrival (AOA) or an angle of departure (AOD). In a case where the angle information includes an azimuth angle and a pitch angle, the angle of arrival includes a zenith angle of arrival (ZOA) and an azimuth angle of arrival (AOA), the angle of departure includes a zenith angle of departure (ZOD) and an azimuth angle of departure (AOD). The spatial domain filtering may be at least one of: a discrete Fourier transform (DFT) vector, a precoding vector, a DFT matrix, a precoding matrix, or a vector formed by a linear combination of multiple DFTs, or a vector formed by a linear combination of multiple precoding vectors. In some embodiments, concepts of a vector and a vector quantity are interchangeable. In some embodiments, a beam pair includes a combination of a sending beam and a receiving beam.

In some embodiments, a beam direction or beam angle may correspondingly include at least one of: an angle of arrival, an angle of departure, a vector or vector index constructed by at least one of an angle of arrival or an angle of departure, a discrete Fourier transform vector, a codeword in a codebook, a sending beam index, a receiving beam index, a sending beam group index, and a receiving beam group index. In a case where the angle information includes an azimuth angle and a pitch angle, the angle of arrival includes a zenith angle of arrival and an azimuth angle of arrival, the angle of departure includes a zenith angle of departure and an azimuth angle of departure.

In some embodiments, a communication node may select an information processing mode to process the obtained information (e.g., channel information, channel matrix information, time domain channel information, frequency domain channel information, angle information, position information), so as to obtain an information processing result (referred to as a processing result for short). The processing result includes one or more pieces of the channel state information, or one or more pieces of beam parameter information, or angle information, position information (e.g., coordinates), and position parameter information.

In some embodiments, the information processing mode may be a traditional information processing mode or a variety of advanced information processing modes. The advanced information processing modes include, but are not limited to an information processing mode based on artificial intelligence (Al). In some examples, the information processing mode is implemented by an artificial intelligence network (also referred to as a neural network, or a neural network model, or a model).

In some embodiments, the artificial intelligence (AI) includes a device, a component, software, a module, a model, a functional module, and a functional function with self-learning capabilities such as machine learning (ML), deep learning, reinforcement learning, transfer learning, deep reinforcement learning, meta-learning. In some embodiments, the artificial intelligence is implemented by an artificial intelligence network (or referred to as a neural network). The neural network includes multiple layers, and each layer includes at least one node. In an example, the neural network includes an input layer, an output layer, and at least one hidden layer. Each layer of the neural network uses a layer including, but is not limited to at least one of a fully-connected layer, a dense layer, a convolutional layer, a transposed convolutional layer, a direct connection layer, an activation function, a normalization layer, a pooling layer, etc. In some embodiments, each layer of the neural network may include a sub-neural network, such as a residual network block (or referred to as a resnet block), a densenet block, or a recurrent neural network (RNN). The artificial intelligence network may be implemented by a model, and the model may include, but is not limited to a model implemented based on the neural network. The neural network model includes a neural network model structure and/or a neural network model parameter. The neural network model structure may be referred to as a model structure for short, and the neural network model parameter may be referred to as a network parameter or a model parameter for short. It is possible to determine, based on the model structure, network architectures, such as a layer number of neural network, a size of each layer, an activation function, a connection situation, a size of a convolution kernel and a convolution stride, a convolution type (e.g., 1D convolution, 2D convolution, 3D convolution, hollow convolution, transposed convolution, separable convolution, grouped convolution, or extended convolution), while the network parameters are weights and/or biases and values of each layer in the neural network model. In addition, a model structure may correspond to multiple sets of values of different neural network model parameters, so as to adapt to different scenarios. Furthermore, the neural network model parameters are obtained through online training or offline training. For example, the neural network model is trained by inputting at least one sample, so as to obtain the neural network model parameters.

For example, a sample includes N features and M labels. N is a positive integer, and M is an integer greater than or equal to 0. In addition, multiple samples may constitute a data set. In an example, a sample includes a feature and a label, such as a sample in supervised learning. In another example, a sample has only one feature and no label, such as a sample for unsupervised learning. In yet another example, a sample has multiple features and a label, such as a sample in a multi-input single-output supervised learning network model. In yet another example, a sample includes a feature and multiple labels, such as a sample in a single-input multiple-output supervised learning network model. In some embodiments, a feature of a sample may be an array, and a label of a sample is also an array. The array may be a vector or a matrix, or a tensor with dimensions greater than two dimensions. Each element in the array may be a discrete value, or may also be a real value, for example, a real value from 0 to 1, or a real value from -0.5 to 0.5.

In an example, it is necessary to perform normalization on the elements in the array corresponding to a label or feature, so as to facilitate fast convergence of the network model. Normalization refers to normalizing values of elements in an array to a value within a range greater than or equal to a and less than or equal to b. For example, a is equal to -0.5 (i.e., a = -0.5), b is equal to 0.5 (i.e., b = 0.5); alternatively, a is equal to 0 (i.e., a = 0), b is equal to 1 (i.e., b = 1). In an example, normalization may be implemented by dividing the elements in the array by a value with a maximum absolute value among values of the elements in the array. In another example, normalization may be implemented by dividing the elements in the array by a variance of the elements in the array. In an example, normalization may be implemented by dividing the elements in the array by a fixed value (e.g., a maximum value among values of all elements in all samples). In yet another example, normalization may be implemented by dividing the elements in the array by a statistical value (e.g., a statistical variance of all elements in all samples). For values of indexes (e.g., a beam index, a CRI, an SSBRI), normalization may be implemented through one-hot encoding.

In some embodiments, a model refers to multiple linear or nonlinear components through which a data flow between an original input of a sample and an output target passes. The model includes a neural network model, a non-artificial intelligence module for processing information or corresponding model thereof, and a functional component or function for mapping input information to output information (the mapping herein includes linear mapping and nonlinear mapping). In some embodiments, each model corresponds to a model indicator (Model ID) or a model identity (Model ID). In some embodiments, the model identifier may also have one of the following other equivalent names or concepts: a model index, a first identifier, a function identifier, a model indicator, etc.

For example, the model includes a model structure and model parameters. For example, the model is a neural network model, and the neural network model includes a neural network model structure and neural network model parameters, which are respectively used to describe the structure of the neural network and the parameter values of the neural network. A neural network model structure may correspond to multiple neural network model parameters, that is, neural network model structures may be the same, but corresponding neural network model parameter values may be different.

In some examples, a communication node may send a functionality or function index to another communication node, to inform the communication node that the communication node may process information by using the information processing mode corresponding to the function index. The functionality may also be referred to as a functional module, a functional function, a functional mapping, or a functional description, and is used to describe features or types of the information processing modes. The information processing mode may include a plurality of types, such as information processing modes for positioning, beam management, CSI prediction, beam prediction, and channel estimation. Moreover, the features of information processing modes include, but are not limited to, a scenario description of functional adaptation, a description of input parameters, a description of output parameters, and types of measurement parameters included in an output result. A functionality corresponds to one or more information processing modes. Each information processing mode may be implemented by using one or more models, or a functionality may be implemented by using one or more models, or a functionality may be implemented by using one or more information processing modes outside models.

In some embodiments, especially in high-frequency transmission, beamforming is required due to the high carrier frequency and large path loss, so as to concentrate and propagate energy towards the terminal, and thus beam management is required. The beam management includes, but is not limited to, some aspects such as beam sweeping, beam tracking, and beam recovery. The core problem to be solved is how to obtain accurate beam pairs with the lowest possible control overhead. The beam sweeping includes transmitting end beam sweeping and/or receiving end beam sweeping. In order to reduce the overhead of beam sweeping, a two-stage sweeping may be adopted. In some embodiments, the beam training may include a first stage of training, a second stage of training, and a third stage of training. In the first stage, a sending beam and a receiving beam are swept simultaneously. In the second stage of beam sweeping, a receiving beam may be unchanged and different sending beams may be swept. In the third stage, a sending beam is unchanged and different receiving beams are swept. In an example, for example, N_{T} beams are sent, a receiving beam is unchanged, and a repetition parameter "repetition" is set to "off". Then, layer 1 reference signal received powers (L1-RSRPs) or layer 1 reference signal signal-to-interference noise ratios (L1-SINRs) corresponding to the N_{T} beams are measured, and beam parameter information corresponding to L beams is selected for reporting. In an example, a beam is sent, N_{R} receiving beams are received, and a repetition parameter is set to "on". Then, the L1-RSRPs or L1-SINRs corresponding to the N_{R} beams are measured, and beam parameter information corresponding to L beams is selected for reporting. Alternatively, if the beam parameter information is not reported, the terminal retains the beam parameter information corresponding to the L beams, such as information of the optimal L receiving beam indexes. In a case where both N_{R} and N_{T} have large values, the reference signal overhead corresponding to beam sweeping is very high. Herein, N_{R} and N_{T} are positive integers. The reference signal overhead during beam sweeping may be reduced by using advanced beam prediction technologies. These advanced technologies may include AI, or other future and existing non-AI technologies for beam prediction. Beam prediction may include spatial domain beam prediction and time domain beam prediction, or space-time domain beam prediction.

In some examples, for spatial domain beam prediction, the input is a beam parameter information group (a first beam parameter information array), and the first beam parameter information group includes L₀ pieces of beam parameter information. Another beam information group (a second beam parameter information array) is predicted according to the L₀ pieces of beam parameter information, and the second beam information group includes L1 pieces of beam parameter information. L1 and L₀ both are positive integers. In some examples, L₀ is less than or equal to L1 (i.e., L₀ ≤ L1). Alternatively, L₀ may also be greater than L1. In this case, the second beam parameter information array includes beam parameter information corresponding to the predicted L1 preferred beams (for example, the CRIs and/or SSBRIs corresponding to the optimal L1 beams, the L1-RSRPs and/or L1-RSRPs and/or probabilities or confidences corresponding to the L1 beams, where L1 may be a positive integer such as 1, 2, 3, 4). The beam may be a sending beam, a receiving beam, or a pair of a sending beam and a receiving beam. Each beam may correspond to a beam direction. In some examples, spatial domain beam prediction may be implemented by Al modules, such as a network model. The beam parameter information corresponding to L₀ beams is combined into a beam parameter information array (the first beam parameter information array) and input into a neural network. The neural network outputs a beam parameter information array (the second beam parameter information array) corresponding to L1 beams, and determines indexes corresponding to the L pieces of beam parameter information with the largest beam parameter information among the beam parameter information in the second beam parameter information array as the preferred beams. In some examples, spatial domain beam prediction may also be implemented by non-AI manners, such as linear or nonlinear mapping, or Wiener filtering. In some examples, the beams corresponding to the first beam parameter information group and the second beam parameter information group are different types of beams, and the types of beams include, for example, wide beams, narrow beams, regular beams, and irregular beams.

In some examples, in the time domain beam prediction process, N first beam parameter information groups may be input, and M second beam parameter information groups may be predicted according to the N first beam parameter information groups. Each first beam parameter information group includes L₀ pieces of beam parameter information, and each of the M second beam parameter information groups includes L1 pieces of beam parameter information. N, M, L, L1, and L₀ are all positive integers. Furthermore, the beam may be a sending beam, a receiving beam, or a pair of a sending beam and a receiving beam. In some examples, the numbers of elements in the N first beam parameter information groups may be different. In some examples, the numbers of elements in the M second beam parameter information groups may be different. Each beam may correspond to a beam direction. Here, the N first beam parameter information groups are beam parameter information before a reference slot, while the M second beam parameter information groups are beam parameter information after the reference slot. In some examples, in a case where L₀ is equal to L1 (i.e., L₀ = L1), beam prediction is time domain beam prediction. In a case where L₀ is less than L1 (i.e., L₀ < L1), beam prediction is space-time domain beam prediction. In some regression models, L₀ may also be greater than L1, that is, the model outputs M beam parameter information groups, each beam parameter information group includes beam parameter information corresponding to L1 preferred beams (for example, the CRIs and/or SSBRIs corresponding to the optimal L1 beams, the L1-RSRPs and/or L1-RSRPs and/or probabilities or confidences corresponding to the L1 beams, where L1 may be a positive integer such as 1, 2, 3, 4). In some examples, time domain beam prediction may be implemented by Al modules, such as a network model. N beam parameter information groups are input, and each of the N beam parameter information groups includes L₀ pieces of beam network model parameter information. Alternatively, N * L₀ pieces of beam parameter information are combined into a large beam parameter information array (the first beam parameter information array) and the beam parameter information array is input into the network model. The network model outputs M second beam parameter information groups, and each of the M second beam parameter information groups includes L1 pieces of beam parameter information. Alternatively, the M * L1 pieces of beam parameter information may be combined into a beam parameter information array (the second beam parameter information array). For each beam parameter information group in M beam groups, an index corresponding to the one or more pieces of beam parameter information with the largest beam parameter information among the beam parameter information in the each beam parameter information group is determined as the preferred beam. In some examples, time domain beam prediction may also be implemented by non-AI manners, such as linear or nonlinear mapping.

In some embodiments, the reference slot includes one of: a slot agreed upon by the base station and the terminal, or a current slot. The current slot refers to a slot for obtaining CSI, or a slot indicated by the base station, or a slot obtained by adding a fixed offset to a slot indicated by the base station, or a slot obtained by adding a fixed offset to the slot in which the terminal receives indication signaling of the base station. Moreover, beam parameter information groups for M slots may be predicted based on the beam parameter information groups for N slots.

In some examples, the model parameters of the neural network may be obtained by means of online training or offline training of the model. For example, the neural network model may be trained by inputting at least one sample. The sample includes a feature and a label. In some examples, the feature is at least one first beam parameter information array, and the label is at least one second beam parameter information array. Moreover, in a process of training the network, the at least one first beam parameter information array has a corresponding relationship with the at least one second beam parameter information array. For example, the at least one first beam parameter information array is in one-to-one correspondence with the at least one second beam parameter information array. The at least one first beam parameter information array may be input into a model to obtain an output result of the model, and the output result of the model is predicted at least one second beam parameter information array. The neural network model parameters are trained according to a loss function between the predicted second beam parameter information array and the second beam parameter information array corresponding to the label. In the deployment or testing phase of the network model, at least one predicted second beam parameter information array is output by inputting at least one first beam parameter information group into the network model. Generally, the number of predicted beams is greater than the number of beams corresponding to the actual input features, so that pilot overhead may be saved. When model performance is monitored, at least one first beam parameter information array may be input into the model, to obtain the output result of the model, which is the predicted at least one beam parameter information array. By comparing the predicted second beam parameter information array with the second beam parameter information array corresponding to the label, the prediction performance of the network may be known, so that whether the model performance is good or bad and whether the model performance is suitable for the current scenario are monitored.

In some examples, a sending beam index and/or a receiving beam index are numbered in an agreed manner, so as to form a beam index. A beam index includes one of: a sending beam index, a receiving beam index, and an index of a pair of a sending beam and a receiving beam. A beam index corresponds to a beam direction, or a vector or matrix corresponding to a beam direction. The terminal receives reference signals (e.g., CSI-RSs, SSBs) and measures beam parameter information corresponding to each beam, so as to obtain a beam parameter information array. Generally, the first beam parameter information array is formed by beam parameter information corresponding to a first beam set, and the second beam parameter information array is formed by beam parameter information corresponding to a second beam set. The first beam set is a subset of the second beam set. Of course, there is also a case where the first beam set and the second beam set come from different beam sets. For example, one of the first beam set and the second beam set is a wide beam and another of the first beam set and the second beam set is a narrow beam.

In some examples, the beam parameter information array is a one-dimensional array. For example, the beam parameter information array is a vector. In some examples, the beam parameter information array is a two-dimensional array. For example, the beam parameter information array is a matrix. In some examples, the beam parameter information array is an array with dimensions greater than two dimensions. For example, the beam parameter information array is a tensor. The vector and matrix may also be regarded as a special case of the tensor.

In some examples, in order to better transmit data or signals, the base station or the terminal needs to acquire measurement parameters. The measurement parameters may include channel state information or other parameters for characterizing the channel. The channel state information may include at least one of the following: a channel state information-reference signal resource indicator (CSI-RS Resource Indicator, CRI), a synchronization signal block resource indicator (SSBRI), a layer 1 reference signal received power (L1 Reference Signal Received Power, L1-RSRP or RSRP), a differential RSRP, a layer 1 reference signal signal-to-interference noise ratio (e.g., L1 Signal-to-Interference Noise Ratio, L1-SINR or SINR), a differential L1-SINR, a reference signal received quality (RSRQ), a layer 1 RSRQ (L1-RSRQ), a differential RSRQ, a channel quality indicator (CQI), a precoding matrix indicator (PMI), a layer indicator (LI), a rank indicator (RI), and precoding information. The precoding information includes first-type precoding information, such as codebook-based precoding information. The precoding matrix indicator is one type of the codebook-based precoding information. The precoding information further includes an implementation manner based on non-codebook, such as second-type precoding information. In an example, the CSI that includes only the first-type precoding information is referred to as a first-type CSI. In an example, the CSI that includes the second type of precoding information is referred to as a second-type CSI.

In some examples, the channel information is information (e.g., a time domain channel matrix, a frequency domain channel matrix, an eigenvector of a time domain channel or a frequency domain channel, or a matrix composed of eigenvectors), obtained according to a reference signal (e.g., CSI-RS), for describing a channel environment between communication nodes. In some embodiments, the channel information is a complex matrix, and a size of the channel matrix is related to the number Nt of transmitting antennas, the number Nr of receiving antennas, and resource elements (REs). For example, there is at least one Nr * Nt channel matrix on a physical resource block.

In some embodiments, the beam parameter information is a layer 1 reference signal received power (L1 Reference Signal Received Power, L1-RSRP or RSRP), or a differential RSRP corresponding to at least one beam. In some embodiments, the beam parameter information is a layer 1 reference signal signal-to-interference noise ratio (e.g., L1 Signal-to-Interference Noise Ratio, L1-SINR or SINR), or a differential SINR corresponding to at least one beam. In some embodiments, the beam parameter information is a reference signal received quality (RSRQ) corresponding to at least one beam. In some embodiments, the beam parameter information is a probability or confidence corresponding to at least one beam. In some embodiments, the beam parameter information is a beam angle (at least one of AOA, ZOA, AOD, ZOD, sometimes also referred to as a horizontal angle of arrival, a vertical angle of arrival, a horizontal angle of departure, and a vertical angle of departure, respectively) corresponding to at least one beam. In some embodiments, the beam parameter information is a sending beam index corresponding to at least one beam. In some embodiments, the beam parameter information is a receiving beam index corresponding to at least one beam. In some embodiments, the beam parameter information is an index of a pair of a sending beam and a receiving beam (referred to as a beam pair index or beam pair for short) corresponding to at least one beam. In some embodiments, the beam parameter information is a beam domain receive power map (BDRPM) corresponding to at least one beam. In some embodiments, the beam parameter information is a channel state information reference signal resource indicator (CSI-RS Resource Indicator, CRI) corresponding to at least one beam. In some embodiments, the beam parameter information is a synchronization signal block resource indicator (SSBRI) or other reference signal resource indicator (e.g., a sounding reference signal resource indicator (SRSRI)) corresponding to at least one beam. In some embodiments, the beam parameter information is a combination of at least two pieces of the following beam parameter information corresponding to at least one beam: an RSRP, an RSRQ, an SINR, a beam angle, a sending beam index, a receiving beam index, a beam pair index, a CRI, and an SSBRI. In some embodiments, the beam parameter information is a linear value of one of an RSRP, an RSRQ, and an SINR. In some embodiments, the beam parameter information is a logarithmic value or a decibel (dB) value of one of an RSRP, an RSRQ, and an SINR.

In some embodiments, the beam parameter information may be obtained based on a CSI-RS measurement. In some embodiments, the beam parameter information is obtained based on an SSB measurement. In some embodiments, the beam parameter information is obtained based on an SRS measurement.

In some examples, the beam parameter information is a subset of the channel state information, that is, the beam parameter information belongs to the channel state information. The channel state information belongs to a measurement parameter. In some examples, a measurement parameter, channel state information, and beam parameter information all belong to a measurement result, a processing result, or a generated result.

In some examples, in order to transmit a measurement result at the physical layer, such as transmitting channel state information, the terminal and the base station define a report (e.g., CSI report or CSI report configuration (CSI report config)). The report defines at least one of the following parameters: a time-frequency resource for transmitting CSI, a report quality, a time-domain category of a report (report Config Type), a channel measurement resource, an interference measurement resource, and a measured bandwidth size. Moreover, the report may be transmitted on an uplink transmission resource. The uplink transmission resource includes a PUSCH and a PUCCH, and the time-domain category of the report may include any one of: a periodic report (e.g., a periodic CSI report, P-CSI), an aperiodic report (e.g., an aperiodic CSI report, an AP-CSI), and a semi-persistent report (e.g., a semi-persistent CSI report, an SP-CSI). For example, the number of bits transmitted by P-CSI is relatively small, and the P-CSI is generally transmitted on the PUCCH; the number of bits transmitted by A-CSI is relatively large, and the A-CSI is generally transmitted on the PUSCH; the SP-CSI may be transmitted based on the PUSCH, or may also be transmitted based on the PUCCH. The P-CSI transmitted based on PUCCH is generally configured by a higher layer signaling (e.g., a radio resource control (RRC)), and the SP-CSI transmitted based on PUCCH is also configured, activated or deactivated by a higher layer signaling (e.g., an RRC and/or an MAC CE), while the SP-CSI transmitted based on PUSCH is activated or deactivated by a physical layer signaling (e.g., downlink control information (DCI)). The A-CSI is triggered by DCI. The DCI is generally transmitted on a physical downlink control channel (PDCCH).

In some embodiments, the base station configures N_{C} reports (e.g., CSI reports) that need to be fed back to the base station for the terminal through a higher layer signaling and/or a physical layer signaling. Each report has an identity (ID), which is referred to as a report ID. The terminal may select M_{C} reports from the N_{C} reports based on its own computing power or processing power and the requirements of the base station, and feeds back, according to an uplink feedback resource, at least one report of the M_{C} reports. N_{C} and M_{C} are positive integers, and M_{C} is less than or equal to N_{C} (i.e., M_{C} ≤ N_{C}). In some embodiments, at least two of the M_{C} reports that need to be fed back have conflicting feedback resources. For example, transmission resources (e.g., PUCCHs or PUSCHs) corresponding to at least two of the M_{C} reports that need to be fed back have at least one same symbol and/or at least one same subcarrier. In addition, a feedback CSI may also be referred to as a transmission CSI or a sending CSI. For example, the channel state information is carried on an uplink transmission resource for feedback or transmission, and the uplink transmission resource and a corresponding CSI are both indicated by a channel state information report. It will be noted that feeding back or transmitting (e.g., sending or receiving) a report means transmitting the content that needs to be transmitted indicated in the report, the content includes but not limited to channel state information or other possible information.

As shown in FIG. 2, a channel state information sending method is provided in the embodiments of the present disclosure, and is applied to a first communication node. The method includes the following steps.

In S101, a first communication node acquires L groups of channel state information, and L is a positive integer.

In some embodiments, the L groups of channel state information include L groups of first channel state information. Alternatively, the L groups of channel state information include N groups of first channel state information and M groups of second channel state information, where N and M are both positive integers, and a sum of N and M is equal to L.

In Example 1, the L groups of channel state information include L groups of first channel state information.

In spatial domain beam prediction, a value of L may be 1, representing a group of channel state information for the input of an information processing module. The value of L may also be 2, representing a group of channel state information for the input of the information processing module and a group of labels for determining the output quality of the information processing module. In time domain beam prediction, or in space-time domain beam prediction, or in time domain channel information prediction, L may include a value greater than or equal to 2. For example, N groups of first channel state information are used as channel state information for the input of the information processing module, and M groups of first channel state information are used as labels for determining the output quality of the information processing module, where M and N are positive integers, and a sum of N and M is equal to L (i.e., M + N = L). In some examples, the L groups of channel state information are obtained by measuring in L slots. In some examples, for example, in spatial domain beam prediction, the channel state information (i.e., features) as the input of the information processing module and labels may be measured in the same slot or in different slots. The slot herein may also be a mini slot, or a symbol group, or other time unit.

In some embodiments, the first channel state information may include one or more of: a first channel quality parameter, a first resource indicator, and a statistical parameter. The first channel quality parameter includes, but is not limited to, an RSRQ, an L1-RSRP, a differential RSRQ, an L1-SINR, or a differential L1-SINR. The first resource indicator may include a CRI, an SSBRI, or an SRSRI, and used to indicate a beam index or a reference signal resource index corresponding to a beam. The statistical parameter may include a confidence or prediction probability of a beam prediction result, or other parameters for evaluating the beam prediction result.

In some embodiments, in an example where the first communication node is a terminal and the second communication node is a base station, in the case of performing spatial domain beam prediction, the second communication node may send reference signal resources in a first reference signal resource set to the first communication node in a slot. Correspondingly, the first communication node may receive and measure the reference signal resources in the first reference signal resource set, to obtain first beam parameter information.

For example, the first reference signal resource set may include L1 CSI-RS resources and/or SSB resources. A CSI-RS resource or an SSB resource corresponds to a beam, or a CSI-RS resource or an SSB resource corresponds to a direction. Thus, the first communication node may receive and measure L1 CSI-RS resources and/or SSB resources, to obtain L1 first channel quality parameters (since beam prediction is performed, L1 pieces of first beam parameter information may also be obtained), and L1 is a positive integer.

In an example, spatial domain beam prediction is performed on a second communication node side, that is, spatial domain beam prediction is performed based on a spatial domain beam prediction model on the second communication node side. The first communication node may determine the L groups of channel state information based on the obtained first beam parameter information.

It will be noted that, in this embodiment, the first communication node may generate a channel state information report based on L channel information groups and send the channel state information report to the second communication node, so that the second communication node may perform beam prediction based on the channel state information report. That is to say, the second communication node may input channel state information in the channel state information report into the spatial domain beam prediction model, to perform a model inference process of the spatial domain beam prediction model, thereby obtaining a beam prediction result output by the spatial domain beam prediction model.

In some embodiments, the value of L may be 1. For example, the L groups of channel state information may include K₁ first channel quality parameters and/or the first resource indicators corresponding to the K₁ first channel quality parameters.

In another example, spatial domain beam prediction is performed on a first communication node side, that is, spatial domain beam prediction is performed based on a spatial domain beam prediction model on the first communication node side. The first communication node may perform beam prediction based on the obtained first beam parameter information, with reference to the spatial domain beam prediction model, to obtain a beam prediction result. The beam prediction result may include the following one or more pieces of channel state information: a statistical parameter, a resource indicator, and a first channel quality parameter. Moreover, the first communication node may determine the L groups of channel state information based on the beam prediction result.

In some embodiments, the value of L may be 1. For example, the L groups of channel state information may include K₁ statistical parameters and first resource indicators corresponding to the K₁ statistical parameters.

It will be noted that, in this embodiment, the first communication node may input the first beam parameter information into the beam prediction model, to perform the inference process of the spatial domain beam prediction model, thereby obtaining the beam prediction result output by the spatial domain beam prediction model, which is L channel information groups. Moreover, the first communication node may also generate a channel state information report based on the L channel information groups and send the channel state information report to the second communication node, so that the second communication node may obtain a preferred beam range indicated in the beam prediction result based on the channel state information report.

In some embodiments, still in an example where the first communication node is a terminal and the second communication node is a base station, in the case of performing time domain beam prediction, the second communication node may send reference signal resources in the first reference signal resource set to the first communication node in each of L slots, and L is a positive integer. Correspondingly, the first communication node may receive and measure the reference signal resources in the L first reference signal resource sets, to obtain first beam parameter information.

For example, the first reference signal resource set may include L1 CSI-RS resources and/or SSB resources. A CSI-RS resource or an SSB resource corresponds to a beam, or a CSI-RS resource or an SSB resource corresponds to a direction. Thus, the first communication node may receive and measure L1 * L CSI-RS resources and/or SSB resources, to obtain L1 * L pieces of first beam parameter information. In other examples, the number of reference signal resources in the first reference signal resource set for each slot may be different.

In an example, time domain beam prediction is performed on the second communication node side, that is, spatial domain beam prediction is performed based on a time domain beam prediction model on the second communication node side. The first communication node may determine the L groups of channel state information based on the obtained first beam parameter information.

In some embodiments, the first channel state information may include a first channel quality parameter. Alternatively, the first channel state information may include a first resource indicator and a first channel quality parameter.

It will be noted that, in this embodiment, the first communication node may generate a channel state information report based on L channel information groups and send the channel state information report to the second communication node, so that the second communication node may perform beam prediction based on the channel state information report. The second communication node may input channel state information in the channel state information report into the time domain beam prediction model, to perform the inference process of the model, thereby obtaining the beam prediction result output by the time domain beam prediction model.

In another example, time domain beam prediction is performed on the first communication node side, that is, spatial domain beam prediction is performed based on a time domain beam prediction model on the first communication node side. The first communication node may perform beam prediction based on the obtained first beam parameter information, with reference to the time domain beam prediction model, to obtain a beam prediction result. The beam prediction result may include the following one or more pieces of channel state information: a first channel quality parameter, a resource indicator, and a statistical parameter. Moreover, the first communication node may determine the L groups of channel state information based on the beam prediction result.

In some embodiments, the value of L may be N. A first channel state parameter may include a statistical parameter and a first resource indicator.

It will be noted that, in this embodiment, the first communication node may input channel state information in the channel state information report into the time domain beam prediction model, to perform the inference process of the model. Moreover, the first communication node may also generate a channel state information report based on L channel information groups and send the channel state information report to the second communication node, so that the second communication node may obtain information of the preferred beam in the next slot indicated in the beam prediction result based on the channel state information report.

In Example 2, the L groups of channel state information include a group of first channel state information and a group of second channel state information.

In some embodiments, the second channel state information may include one or more of: a second channel quality parameter and a second resource indicator. The second channel quality parameter includes an RSRQ, a differential RSRQ, an L1-RSRP, a differential RSRQ, an L1-SINR, or a differential L1-SINR. The second resource indicator may include a CRI, an SSBRI, or an SRSRI.

In some embodiments, in the case of performing spatial domain beam prediction, the second communication node sends reference signal resources in a first reference signal resource set to the first communication node in a first-type slot. The second communication node may also send reference signal resources in a second reference signal resource set to the first communication node in a second-type slot.

Correspondingly, the first communication node may receive and measure the reference signal resources in the first reference signal resource set and a second reference signal resource, to obtain first beam parameter information and second beam parameter information.

For example, the first reference signal resource set may include L1 CSI-RS resources and/or SSB resources, so that the first communication node may receive and measure L1 CSI-RS resources and/or SSB resources, to obtain L1 pieces of first beam parameter information, where L1 is a positive integer. Moreover, the second reference signal resource set may include L2 CSI-RS resources and/or SSB resources. Furthermore, the first communication node may receive and measure L2 CSI-RS resources and/or SSB resources, to obtain L2 pieces of second beam parameter information, where L2 is a positive integer.

In some embodiments, the second reference signal resource set may be a subset of the first reference signal resource set, so that the second communication node may send only the first reference signal resource set, and the first-type slot and the second-type slot are the same slot. In addition, a second reference signal may also distinguish a beam corresponding to the first reference signal resource set and a beam corresponding to the second reference signal resource set by sending an identifier of each reference signal resource set or by mapping. For example, the first reference signal resource set has a mapping relationship with its corresponding beam, and the second reference signal resource set has a mapping relationship with its corresponding beam.

In some embodiments, the second reference signal resource set may be different from the first reference signal resource set. Therefore, the first-type slot and the second-type slot may be different slots. Alternatively, the first-type slot and the second-type slot may be the same slot.

In some embodiments, the second reference signal resource set and the first reference signal resource set correspond to different types of beams. For example, the beam corresponding to the second reference signal resource set is a wide beam, while the beam corresponding to the first reference signal resource set is a narrow beam.

Furthermore, spatial domain beam prediction is performed on the second communication node side, that is, spatial domain beam prediction is performed based on a spatial domain beam prediction model on the second communication node side. The first communication node may determine the N groups of first channel information based on the obtained first beam parameter information, and determine the M groups of first channel information based on the obtained second beam parameter information.

It will be noted that, in this embodiment, the first communication node may generate a channel state information report based on L channel information groups and send the channel state information report to the second communication node, so that the second communication node may perform model training and model monitoring on the spatial domain beam prediction model based on the channel state information report. The model monitoring refers to a process of determining the prediction performance of a model by comparing the prediction result with the second channel state information, and then monitoring whether the model is suitable for the current usage scenario.

In some embodiments, in the case of performing time domain beam prediction, the second communication node may send reference signal resources in the first reference signal resource set to the first communication node in each of N slots, and N is a positive integer. Moreover, the second communication node also sends reference signal resources in the second reference signal resource set to the first communication node in each of M slots, and M is a positive integer. Correspondingly, the first communication node may receive and measure the reference signal resources in the N first reference signal resource sets, to obtain first beam parameter information (i.e., the N groups of first channel state information); and the first communication node may receive and measure the reference signal resources in the M second reference signal resource sets, to obtain second beam parameter information (i.e., the M groups of second channel state information).

For example, the first reference signal resource set may include L1 CSI-RS resources and/or SSB resources. Thus, the first communication node may receive and measure L1 * N CSI-RS resources and/or SSB resources, to obtain L1 * N pieces of first beam parameter information. The second reference signal resource set may include L2 CSI-RS resources and/or SSB resources. Thus, the first communication node may receive and measure L2 * M CSI-RS resources and/or SSB resources, to obtain L2 * M pieces of second beam parameter information. In other examples, the number of reference signal resources in the first reference signal resource set for each slot may be different. In some examples, the number of reference signal resources in the second reference signal resource set for each slot may be different.

It will be noted that, for ease of description, the examples in the embodiments of the present disclosure are described by using the L1-RSRP. In other examples, all L1-RSRPs may be replaced with at least one of the following channel quality parameters: a differential L1-RSRP, an RSRQ, a differential RSRQ, an L1-SINR, a differential L1-RSRP, a probability, and a confidence.

In some embodiments, the M slots may be consecutive slots, non-consecutive slots, or M slots with the same intervals. Similarly, the N slots may be consecutive slots, non-consecutive slots, or N slots with the same intervals.

In some embodiments, a beam set corresponding to the first reference signal resource set is the same as a beam set corresponding to the second reference signal resource set. Alternatively, the number of beams corresponding to the first reference signal resource set is the same as the number of beams corresponding to the first reference signal resource set.

In some embodiments, the second reference signal resource set may be a subset of the first reference signal resource set. A second reference signal may also distinguish a beam corresponding to the first reference signal resource set and a beam corresponding to the second reference signal resource set by sending an identifier of each reference signal resource set or by mapping. For example, the first reference signal resource set has a mapping relationship with its corresponding beam, and the second reference signal resource set has a mapping relationship with its corresponding beam.

In some embodiments, the second reference signal resource set and the first reference signal resource set correspond to different types of beams. For example, the beam corresponding to the second reference signal resource set is a wide beam, while the beam corresponding to the first reference signal resource set is a narrow beam.

Furthermore, time domain beam prediction is performed on the second communication node side, that is, beam prediction is performed based on a time domain beam prediction model on the second communication node side. The first communication node may determine the N groups of first channel information based on the obtained first beam parameter information, and determine the M groups of first channel information based on the obtained second beam parameter information.

It will be noted that, in this embodiment, the first communication node may generate a channel state information report based on L channel information groups and send the channel state information report to the second communication node, so that the second communication node may perform model training and model monitoring on the spatial domain beam prediction model based on the channel state information report.

In S102, the first communication node generates a channel state information report based on the L groups of channel state information.

In some embodiments, the channel state information report is a resource for transmitting wireless channel state information, and the report may include at least one pieces of channel state information. In some embodiments, the channel state information report may include two portions. A first portion of the channel state information report includes the number of pieces of channel state information, and a second portion of the channel state information report includes the channel state information.

In some embodiments, the first communication node may generate the first portion of the channel state information report based on the numbers K₁, ..., K_{L} of pieces of channel state information corresponding to the L groups of channel state information. K₁, ..., K_{L} are all non-negative integers.

In some embodiments, the first portion of the channel state information report includes the numbers K₁, ..., K_{L} of pieces of channel state information corresponding to the L groups of channel state information, and/or the second portion of the channel state information report includes the L groups of channel state information.

In some embodiments, the second portion of the channel state information report is determined based on the first portion of the channel state information report. For example, based on the number Ki of pieces of channel state information of the i-th group of channel state information in the channel state information report, it is determined that the second portion of the channel state information report includes Ki pieces of channel state information corresponding to the i-th group of channel state information, and the Ki pieces of channel state information include at least one of: a first channel quality parameter, a statistical parameter, a second channel quality parameter, a first resource indicator, and a second resource indicator. Herein, i = 1, ..., L.

In some embodiments, the channel state information report may at least meet the following several implementation manners.

In an implementation manner 1, the first communication node may use the numbers of pieces of channel state information corresponding to the L groups of channel state information as the first portion of the channel state information report. Correspondingly, the first communication node may use all pieces of channel state information corresponding to the L groups of first channel state information as the second portion of the channel state information report.

The first portion of the channel state information report includes L values.

In an example, a value of L is 1. In a case where the L groups of channel state information include K₁ pieces of channel state information, the first portion of the channel state information report may include a value of K₁, and K₁ is a positive integer.

In another example, the numbers of pieces of channel state information corresponding to the L groups of first information state information are L₁, L₂, L₃, ..., L_{L}, respectively. The first portion of the channel state information report may include values of L₁, L₂, L₃, ..., L_{L}, and L₁, L₂, L₃, ..., L_{L} are all positive integers.

In an implementation manner 2, the first communication node may determine P groups of channel state information to be sent from the pieces of channel state information corresponding to the L groups of channel state information, and use the numbers of pieces of channel state information corresponding to the P groups of channel state information to be sent as the first portion of the channel state information report, and P is a positive integer. Correspondingly, the second portion of the channel state information report includes the pieces of channel state information corresponding to the P groups of first channel state information.

In an example, a value of P is less than or equal to L. The L groups of channel state information may form L channel state information groups. For any one of the P groups of channel state information to be sent, the group of channel state information may include all pieces of channel state information in any one of the channel state information groups.

For example, the numbers of pieces of channel state information corresponding to the L groups of first information state information are L₁, L₂, L₃, ..., L_{P}, ..., L_{L}, respectively, and the numbers of pieces of channel state information corresponding to the P groups of channel state information to be sent are L₁, L₂, L₃, ..., L_{P}, respectively. The first portion of the channel state information report may include values of L₁, L₂, L₃, ..., L_{P}, and L₁, L₂, L₃, ..., L_{P} are all positive integers.

In another example, the L groups of channel state information may form L channel state information groups. For any one of the P groups of channel state information to be sent, the group of channel state information may include some pieces of channel state information in any one of the plurality of channel state information groups.

For example, the numbers of pieces of channel state information corresponding to the L groups of first information state information are L₁, L₂, L₃, ..., L_{P}, ..., L_{L}, respectively, and the numbers of pieces of channel state information corresponding to the P groups of channel state information to be sent are P₁, P₂, P₃, ..., P_{P}, respectively. The first portion of the channel state information report may include values of P₁, P₂, P₃, ..., P_{P}, and P₁, P₂, P₃, ..., P_{P} are all positive integers, and the first portion of the channel state information report may further include a group index or bitmap for the P groups of channel state information to be sent.

In S103, the first communication node sends the channel state information report.

In some embodiments, the first communication node may encode the channel state information report, to obtain a coding block to be transmitted. Then, the first communication node sends the coding block.

In some embodiments, in the case of spatial domain beam prediction, the first communication node may sort pieces of first channel state information in the second portion of the channel state information report based on values of the first channel quality parameters, to obtain a sorting result, and then encode the second portion of the channel state information report based on the sorting result.

For example, in an example where the first channel state information includes an L1-RSRP and a CRI, the L1-RSRPs and CRIs may be sorted in descending order based on values of the L1-RSRPs. That is to say, the L1-RSRP with the largest value is sorted first, followed by the CRI corresponding to the L1-RSRP with the largest value. Then, the L1-RSRP with the second largest value is sorted, followed by the CRI corresponding to the L1-RSRP with the second largest value, and so on, until all L1-RSRPs and CRIs are sorted. In some embodiments, all L1-RSRPs may also be sorted first, and then the CRIs corresponding to the L1-RSRPs may be sorted based on the order of the L1-RSRPs. In some examples, CRIs and their corresponding L1-RSRPs may be sorted in ascending or descending order based on values of the CRIs. The L1-RSRP herein may be replaced with other beam parameter information.

In some embodiments, in the case of spatial domain beam prediction, the first communication node may sort pieces of first channel state information in the second portion of the channel state information report based on values of the statistical parameters, to obtain a sorting result, and then encode the second portion of the channel state information report based on the sorting result.

For example, in an example where the first channel state information includes a prediction probability and a CRI, the prediction probabilities and CRIs may be sorted in descending order based on values of the prediction probabilities. That is to say, the prediction probability with the largest value is sorted first, followed by the CRI corresponding to the prediction probability with the largest value. Then, the prediction probability with the second largest value is sorted, followed by the CRI corresponding to the prediction probability with the second largest value, and so on, until all prediction probabilities and CRIs are sorted. In some embodiments, all prediction probabilities may be sorted first, and then the CRIs corresponding to the prediction probabilities may be sorted based on the order of the prediction probabilities.

In some embodiments, in a case where the L groups of channel state information include N groups of first channel state information and M groups of second channel state information, the first communication node may sort the N groups of first channel state information and then sort the M groups of second channel state information, or the first communication node may sort the M groups of second channel state information and then sort the N groups of first channel state information, to obtain a sorting result, thereby encoding the second portion of the channel state information report based on the sorting result. In some examples, each group of channel state information may be sorted based on a value of the slot or group index corresponding to the group of channel state information. A group of channel state information with a low group index or a low corresponding slot is sorted first, and then another group of channel state information with a high group index or a high corresponding slot is sorted, until all groups of channel state information are sorted.

It will be understood that the sorting manners are only examples, the embodiments of the present disclosure may also adopt other possible sorting manners to sort the pieces of first channel state information in the second portion of the channel state information report, which is not limited herein.

In some embodiments, in the case of time domain beam prediction, the first communication node may sort pieces of first channel state information in the second portion of the channel state information report based on an order of slots, to obtain a sorting result, and then encode the second portion of the channel state information report based on the sorting result.

For example, in an example where the first channel state information includes an L1-RSRP and a CRI, K₁ L1-RSRPs and K₁ CRIs in the first-type slot of L slots may be sorted first, and then K₂ L1-RSRPs and K₂ CRIs in the second-type slot of the L slots are sorted, and so on, until the L1-RSRPs and CRIs in all slots are sorted. The L1-RSRP herein may be replaced with other beam parameter information.

In some embodiments, the first communication node may sort pieces of first channel state information in the second portion of the channel state information report based on values of the first channel quality parameters and/or an order of the slots, to obtain a sorting result, and then encode the second portion of the channel state information report based on the sorting result.

In some embodiments, the first communication node may sort pieces of first channel state information in the second portion of the channel state information report based on values of the statistical parameters and/or an order of the slots, to obtain a sorting result, and then encode the second portion of the channel state information report based on the sorting result.

In some embodiments, in a case where the L groups of channel state information include N groups of first channel state information and M groups of second channel state information, the first communication node may sort the N groups of first channel state information and then sort the M groups of second channel state information, or the first communication node may sort the M groups of second channel state information and then sort the N groups of first channel state information, to obtain a sorting result, thereby encoding the second portion of the channel state information report based on the sorting result.

It will be understood that the sorting manners are only examples, the embodiments of the present disclosure may also adopt other possible sorting manners to sort the pieces of first channel state information in the second portion of the channel state information report, which is not limited herein.

In some embodiments, during the quantization of the first channel quality parameters in the second portion of the channel state information report, a first channel quality parameter with the largest parameter value may be quantized based on its absolute value, and the other first channel quality parameters may be quantized based on their differentials with respect to the first channel quality parameter with the largest parameter value. For example, considering the L1-RSRP as an example, except for the largest L1-RSRP quantized by using the absolute value, the other L1-RSRPs may be quantized by using the differentials with respect to the largest L1-RSRP.

Based on the technical solutions provided in the embodiments of the present disclosure, information of the state information report applicable to each usage scenario may be determined based on different usage scenarios of the feedback state information report, thereby improving the flexibility of channel information feedback, meeting different information requirements of beam prediction in different scenarios, and improving the accuracy of beam prediction. In addition, data transmission overhead may also be reduced by determining the amount of information in the suitable state information report.

In some embodiments, in a case where the L groups of channel state information meet Example 1 in S101 and include the L groups of first channel state information, as shown in FIG. 3, S102 may be implemented as the following S102a1 and S102a2.

In S102a1, the first communication node generates the first portion of the channel state information report based on the numbers of pieces of first channel state information corresponding to the L groups of first channel state information.

For example, the numbers of pieces of first channel state information corresponding to the L groups of first channel state information may include K₁, ..., K_{L}, respectively, and K₁, ..., K_{L} are all non-negative integers.

In S102a2, the first communication node generates the second portion of the channel state information report based on the first portion of the channel state information report and the L groups of first channel state information.

In some embodiments, the first channel state information may include one or more of: a first channel quality parameter, a first resource indicator, and a statistical parameter.

In some embodiments, the channel state information report may further include at least one of: the number of quantization bits of channel state information, a value of L, and a first bitmap. The first bitmap is a group mapping diagram of the L groups of channel state information. The first bitmap is used to indicate a transmission status of the L groups of channel state information. For example, a length of the first bitmap is L bits, and the i-th bit is used to indicate whether the i-th group of channel state information has been transmitted. For example, a value of the i-th bit is a first value (e.g., 1), which is used to indicate that the i-th group of channel state information has been transmitted; the value of the i-th bit is a second value (e.g., 0), which is used to indicate that the i-th group of channel state information has not been transmitted and a group index of channel state information needs to be fed back.

In some embodiments, a group index i of channel state information is used to represent an index of the i-th group of channel state information in the L groups of channel state information, where i = 1, ..., L, or i may be an integer from 0 to a difference (L - 1) between L and 1. Moreover, the group index of channel state information may also be divided into group indexes of two pieces of sub-channel state information, and the group indexes of two pieces of sub-channel state information correspond to N groups of first channel state information and M groups of second channel state information, respectively. A group index of first sub-channel state information is a non-negative integer less than or equal to N, and a group index of second sub-channel state information is a non-negative integer less than or equal to M, where M and N are positive integers and a sum of M and N is equal to L (i.e., M + N = L).

In some embodiments, the first portion of the channel state information report further includes a label type, and the label type is used to indicate whether the second channel state information is a second resource index or a second channel quality parameter. For example, a value of the label type is a first value, which indicates that the second channel state information is the second resource index; the value of the label type is a second value, which indicates that the second channel state information is the second channel quality parameter.

In some embodiments, in the case of spatial domain beam prediction, the channel state information report may include the following examples.

In an example, a value of L may be 1, and the L groups of channel state information include K₁ first channel quality parameters. The first portion of the channel state information report includes a value of K₁, and K₁ is a positive integer. The second portion of the channel state information report includes the K₁ first channel quality parameters.

For example, in an example where the first channel quality parameter is an L1-RSRP, spatial domain beam prediction is performed on the second communication node side. The first communication node may receive and measure reference signal resources in the first reference signal resource set, to obtain beam parameter information including L₀ L1-RSRPs, where L₀ is a positive integer and L₀ is greater than or equal to K₁. Moreover, the first communication node may determine K₁ L1-RSRPs from the L₀ L1-RSRPs and send the K₁ L1-RSRPs to the second communication node. That is to say, the first portion of the channel state information report includes a value of K₁, and the second portion of the channel state information report includes the K₁ L1-RSRPs.

It will be noted that in order to perform model inference by using the spatial domain beam prediction model on the second communication node side, the first communication node may send a plurality of (e.g., K₁) samples to the second communication node. Each sample includes a feature corresponding to the first channel quality parameter. For example, the feature of the sample is an L1-RSRP.

Alternatively, in an example where the first channel quality parameter is an L1-RSRP, spatial domain beam prediction is performed on the first communication node side. The first communication node receives and measures reference signal resources in the first reference signal resource set, to obtain beam parameter information including L₀ L1-RSRPs. Moreover, the first communication node uses the L₀ L1-RSRPs as the input of the spatial domain beam prediction model, so as to outputs K₁ L1-RSRPs. Therefore, the first portion of the channel state information report includes a value of K₁, and the second portion of the channel state information report includes the K₁ L1-RSRPs. In some embodiments, the value of K₀ may be the number of resources in the first reference signal resource set. That is to say, the model predicts the L1-RSRPs corresponding to all beams.

In some embodiments, a maximum value of K₁ is determined based on a received signaling, and the received signaling includes a higher layer signaling and/or a physical layer signaling.

In some examples, the first channel quality parameter also includes an RSRQ, a differential RSRQ, an L1-SINR, or a differential L1-SINR.

In another example, the L groups of channel state information include K₁ first resource indicators and/or K₁ first channel quality parameters. The first portion of the channel state information report includes a value of K₁, and K₁ is a positive integer. The second portion of the channel state information report includes any one of the following:
K₁ first channel quality parameters,
K₁ first resource instructions,
K₁ first channel quality parameters and the K₁ first resource indicators, and
K₁ first channel quality parameters and a first resource indicator.

For example, in an example where the first channel quality parameter is an L1-RSRP and the first resource indicator is a CRI, spatial domain beam prediction is performed on the second communication node side. The first communication node receives and measures reference signal resources in the first reference signal resource set, to obtain beam parameter information including L₀ L1-RSRPs. Moreover, the first communication node may determine K₁ L1-RSRPs from the L₀ L1-RSRPs and/or the CRIs corresponding to the K₁ L1-RSRPs and send them to the second communication node. That is to say, the first portion of the channel state information report includes a value of K₁, and the second portion of the channel state information report includes any one of: K₁ L1-RSRPs, K₁ CRIs, K₁ L1-RSRPs and K₁ CRIs, and K₁ L1-RSRPs and a CRI. In a case where the second portion of the channel state information report includes K₁ L1-RSRPs and a CRI, the one CRI may be the CRI corresponding to the largest L1-RSRP among the K₁ L1-RSRPs. In this case, the value of K₁ is equal to the number of reference signal resources in the first reference signal resource set or the number of beams corresponding to the first reference signal resource set.

Alternatively, in an example where the first channel quality parameter is an L1-RSRP and the first resource indicator is a CRI, spatial domain beam prediction is performed on the first communication node side. The first communication node receives and measures reference signal resources in the first reference signal resource set, to obtain beam parameter information including L₀ L1-RSRPs. Moreover, the first communication node uses the L₀ L1-RSRPs as the input of the spatial domain beam prediction model, so as to output K₁ L1-RSRPs and/or K₁ CRIs. Therefore, the first portion of the channel state information report includes the value of K₁, and the second portion of the channel state information report includes any one of: K₁ L1-RSRPs, K₁ CRIs, K₁ L1-RSRPs and K₁ CRIs, and K₁ L1-RSRPs and a CRI.

In some embodiments, the value of K₁ may be the number of resources in the first reference signal resource set. That is to say, the model predicts the L1-RSRPs corresponding to all beams.

In some examples, the first channel quality parameter also includes an RSRQ, a differential RSRQ, an L1-SINR, or a differential L1-SINR. The first resource indicator may also include an SSBRI or other possible parameters.

In some examples, the first communication node may determine, based on a preset RSRP threshold, K₁ L1-RSRPs that are greater than the preset RSRP threshold from L₀ L1-RSRPs. In addition, in a case where the second portion of the channel state information report includes K₁ L1-RSRPs and a CRI, the one CRI may be the CRI corresponding to the largest L1-RSRP among the K₁ L1-RSRPs. In this case, the value of K₁ is equal to the number of reference signal resources in the first reference signal resource set or the number of beams corresponding to the first reference signal resource set.

In yet another example, in the case of spatial domain beam prediction, the L groups of first channel state information include K₁ statistical parameters and/or K₁ first resource indicators. The first portion of the channel state information report includes a value of K₁, and K₁ is a positive integer. The second portion of the channel state information report includes: K1 statistical parameters and/or the first resource indicators corresponding to K₁ statistical parameters.

For example, in an example where the statistical parameter is a prediction probability and the first resource indicator is a CRI, spatial domain beam prediction is performed on the first communication node side. The first communication node receives and measures reference signal resources in the first reference signal resource set, to obtain beam parameter information including L₀ L1-RSRPs. Moreover, the first communication node uses the L₀ L1-RSRPs as the input of the spatial domain beam prediction model, so as to output K prediction probabilities and/or the first resource indicators corresponding to the K statistical parameters. Each probability corresponds to a predicted beam. Furthermore, the first communication node may determine K₁ prediction probabilities from the K prediction probabilities, and also determine the CRIs corresponding to the K₁ prediction probabilities. Therefore, the first portion of the channel state information report includes a value of K₁, and the second portion of the channel state information report includes the K₁ prediction probabilities and/or the CRIs corresponding to the K₁ prediction probabilities.

In some embodiments, the first communication node may determine the value of K₁ based on a preset prediction probability threshold.

For example, the first communication node may use any one or more prediction probabilities as a combination and calculate a sum of the prediction probabilities in each combination, and then determine a prediction probability combination with the smallest number of prediction probabilities among one or more prediction probability combinations whose sum of prediction probabilities is greater than a preset prediction probability threshold. Therefore, the first communication node may use the number of prediction probabilities in the prediction probability combination with the smallest number of prediction probabilities as the value of K₁ mentioned above. Moreover, the second portion of the channel state information report includes the prediction probability combination with the smallest number of prediction probabilities.

For example, the preset prediction probability threshold P0 is equal to 80% (i.e., PO = 80%), the probabilities output by the spatial domain beam prediction model are 70%, 15%, 1%, 1%, ... (in descending order). The highest prediction probability is 70% and is less than P0, and the second highest prediction probability is 15%, a sum of the two prediction probabilities is greater than PO. Therefore, the value of K₁ is 2. Alternatively, the probabilities output by the spatial domain beam prediction model are 60%, 15%, 15%, 1%, ... (in descending order). The top three highest prediction probabilities among these probabilities are 60%, 15%, and 15%, a sum of the three prediction probabilities is greater than P0, and the probabilities corresponding to any two beams are less than P0. Therefore, K₁ is equal to 3 (i.e., K₁ = 3). In some embodiments, PO may be obtained according to simulation, statistics, or other manners, or P0 may be determined based on the received signaling, and the signaling includes a higher layer signaling and/or a physical layer signaling.

In some embodiments, a maximum possible value K₃ of K₁ may also be determined. For example, the probabilities output by the spatial domain beam prediction model are 10%, 8%, 8%, 7%, 6%, 1%, 1%, ... (in descending order). Since the prediction probabilities of beams are all low, it may be necessary to feed back a large number of beams for the sum of the prediction probabilities to exceed 80%. In this case, the value of K₁ needs to be determined based on K₃. In a case where the prediction probability combination, with the smallest number of prediction probabilities, among one or more prediction probability combinations whose sum of prediction probabilities is greater than the preset prediction probability threshold, includes K₂ prediction probabilities, if K₂ is greater than K₃, the value of K₁ may be determined to be K₃.

In some embodiments, K₃ may be determined based on the received signaling, and the signaling includes a higher layer signaling and/or a physical layer signaling.

In some examples, the first resource indicator may also include an SSBRI or other possible parameters. The statistical parameter may also include a prediction probability or other parameters for evaluating the beam prediction result.

In some embodiments, in the case of time domain beam prediction, the channel state information report may include the following examples.

In an example, in the case of time domain beam prediction, the first channel state information includes a first resource indicator and a first channel quality parameter. The first portion of the channel state information report includes the numbers of pieces of first channel state information corresponding to the L groups of first channel state information. The second portion of the channel state information report includes the first resource indicators and/or the first channel quality parameters of the pieces of first channel state information in the L groups of first channel state information.

For example, the numbers of pieces of first channel state information corresponding to the L groups of first channel state information are K₁, ..., K_{L}, respectively, and the second portion of the channel state information report includes any one of the following:
K₁ first channel quality parameters of the first group of channel state information, ..., Kᵢ first channel quality parameters of the i-th group of channel state information, ..., K_{L} first channel quality parameters of the L-th group of channel state information;
K₁ first resource indicators of the first group of channel state information, ..., Kᵢ i-th resource indicators of the i-th group of channel state information, ..., K_{L} first resource indicators of the L-th group of channel state information; and
K₁ first channel quality parameters and K₁ first resource indicators of the first group of channel state information, ..., Kᵢ first channel quality parameters and Kᵢ first resource indicators of the i-th group of channel state information, ..., K_{L} first channel quality parameters and K_{L} first resource indicators of the L-th group of channel state information.

In some embodiments, the second portion of the channel state information report may include K₁ first channel quality parameters and a first resource indicator of the first group of channel state information, ..., Kᵢ first channel quality parameters and a first resource indicator of the i-th group of channel state information, ..., K_{L} first channel quality parameters and a first resource indicator of the L-th group of channel state information.

In an example, in an example where the first channel quality parameter is an L1-RSRP and the first resource indicator is a CRI, time domain beam prediction is performed on the second communication node side. The first communication node receives and measures reference signal resources in the first reference signal resource set corresponding to each of L slots, to obtain beam parameter information including L₀ L1-RSRPs and L₀ CRIs corresponding to each of the L slots. Moreover, the first communication node may determine K₁, K₂, ..., K_{L} L1-RSRPs from the groups of L₀ L1-RSRPs corresponding to the L slots and K₁, K₂, ..., K_{L} CRIs.

In some embodiments, the first communication node may determine K₁, K₂, ..., K_{L} L1-RSRPs from the groups of L₀ L1-RSRPs corresponding to the L slots based on a preset RSRP threshold, and then determine the CRIs corresponding to the K₁, K₂, ..., K_{L} L1-RSRPs. Moreover, different RSRP thresholds may be set for different slots among the L slots. Alternatively, a same RSRP threshold may also be set for different slots among the L slots.

In some embodiments, the first communication node may determine Kᵢ L1-RSRPs in the i-th slot of the slots corresponding to L detection windows and/or the CRIs corresponding to the Kᵢ L1-RSRPs, i = 1, ..., L.

Furthermore, the first portion of the channel state information report includes values of K₁, K₂, ..., K_{L}, and the second portion of the channel state information report includes Kᵢ L1-RSRPs in the i-th slot of L slots and/or the CRIs corresponding to the Kᵢ L1-RSRPs, i = 1, ..., L.

In some embodiments, the first portion of the channel state information report includes values of K₁, K₂, ..., K_{L}, and the second portion of the channel state information report includes Kᵢ L1-RSRPs in the i-th slot of L slots and/or a CRI. In a case where the second portion of the channel state information report includes one CRI, the one CRI may be the CRI corresponding to the largest L1-RSRP among the Kᵢ L1-RSRPs in the i-th slot. In this case, the value of Kᵢ is equal to the number of reference signal resources in the first reference signal resource set corresponding to the i-th slot or the number of beams corresponding to the first reference signal resource set corresponding to the i-th slot.

Alternatively, in an example where the first channel quality parameter is an L1-RSRP and the first resource indicator is a CRI, spatial domain beam prediction is performed on the first communication node side. The first communication node receives and measures reference signal resources in the first reference signal resource set corresponding to each of L slots, to obtain beam parameter information including N0 L1-RSRPs corresponding to each of N slots. Moreover, the first communication node uses the N0 L1-RSRPs corresponding to each of the N slots as the input of the spatial domain beam prediction model, so as to output L * N1 L1-RSRPs corresponding to the L slots and/or N1 CRIs. Both N and L are positive integers. Moreover, the first communication node may determine K₁, K₂, ..., K_{L} L1-RSRPs from the groups of N1 L1-RSRPs corresponding to the L slots and the K₁, K₂, ..., K_{L} CRIs corresponding to the K₁, K₂, ..., K_{L} L1-RSRPs.

In some embodiments, the first communication node may determine K₁, K₂, ..., K_{L} L1-RSRPs from the groups of N1 L1-RSRPs corresponding to the L slots based on a preset RSRP threshold. Moreover, different RSRP thresholds may be set for different slots among the L slots. Alternatively, a same RSRP threshold may also be set for different slots among the L slots.

Furthermore, the first communication node may feed back Kᵢ L1-RSRPs in the i-th slot of L slots in the detection windows and/or the CRIs corresponding to the Kᵢ L1-RSRPs, i = 1, ..., L. That is to say, the first portion of the channel state information report includes values of K₁, K₂, ..., K_{L}, and the second portion of the channel state information report includes Kᵢ L1-RSRPs in the i-th slot of L slots and/or the CRIs corresponding to the Kᵢ L1-RSRPs, i = 1, ..., L.

In some examples, the first channel quality parameter also includes an RSRQ, a differential RSRQ, an L1-SINR, or a differential L1-SINR. The first resource indicator may also include an SSBRI or other possible parameters.

In another example, in the case of time domain beam prediction, the first channel state information includes a first resource indicator and a statistical parameter; the first portion of the channel state information report includes the numbers of pieces of first channel state information corresponding to the L groups of first channel state information; the second portion of the channel state information report includes the first resource indicators and/or statistical parameters of pieces of first channel state information in the L groups of first channel state information.

For example, the numbers of pieces of second channel state information corresponding to the L groups of second channel state information are K₁, ..., K_{L}, respectively, and the second portion of the channel state information report includes any one of the following:
K₁ statistical parameters of the first group of channel state information, ..., Kᵢ statistical parameters of the i-th group of channel state information, ..., K_{L} statistical parameters of the L-th group of channel state information;
K₁ first resource indicators of the first group of channel state information, ..., Kᵢ first resource indicators of the i-th group of channel state information, ..., K_{L} first resource indicators of the L-th group of channel state information; and
K₁ statistical parameters and K₁ first resource indicators of the first group of channel state information, ..., Kᵢ statistical parameters and Kᵢ first resource indicators of the i-th group of channel state information, ..., K_{L} statistical parameters and K_{L} first resource indicators of the L-th group of channel state information.

In some embodiments, the second portion of the channel state information report may include K₁ statistical parameters and a first resource indicator of the first group of channel state information, ..., Kᵢ statistical parameters and a first resource indicator of the i-th group of channel state information, ..., K_{L} statistical parameters and a first resource indicator of the L-th group of channel state information.

In an example, in an example where the statistical parameter is a prediction probability and the first resource indicator is a CRI, time domain beam prediction is performed on the first communication node side. The first communication node receives and measures reference signal resources in the first reference signal resource set corresponding to each of L slots, to obtain beam parameter information including N0 L1-RSRPs corresponding to each of N slots. Moreover, the first communication node uses the N0 L1-RSRPs corresponding to each of the N slots as the input of the spatial domain beam prediction model, so as to output the L * N1 prediction probabilities corresponding to the L slots and/or N1 CRIs. Both N and L are positive integers. Moreover, the first communication node may determine K₁, K₂, ..., K_{L} prediction probabilities from the groups of N1 prediction probabilities corresponding to the L slots and the K₁, K₂, ..., K_{L} CRIs corresponding to the K₁, K₂, ..., K_{L} prediction probabilities.

In some embodiments, the first communication node may determine K₁, K₂, ..., K_{L} prediction probabilities from the groups of N1 prediction probabilities corresponding to the L slots based on a preset prediction probability threshold. Moreover, different prediction probability thresholds may be set for different slots among the L slots. Alternatively, a same prediction probability threshold may be set for different slots among the L slots.

Furthermore, the first communication node may feed back Kᵢ prediction probabilities in the i-th slot of L slots in the detection windows and/or the CRIs corresponding to the Kᵢ prediction probabilities, i = 1, ..., L. That is to say, the first portion of the channel state information report includes values of K₁, K₂, ..., K_{L}, and the second portion of the channel state information report includes Kᵢ prediction probabilities in the i-th slot of L slots and/or the CRIs corresponding to the Kᵢ prediction probabilities, i = 1, ..., L.

In some examples, the first resource indicator may also include an SSBRI or other possible parameters. The statistical parameter may also include a confidence or other parameters for evaluating the beam prediction result.

Based on the technical solutions provided in the embodiments of the present disclosure, information of the state information report applicable to each usage scenario may be determined based on a variety of usage scenarios related to beam prediction model inference, thereby improving the flexibility of channel information feedback.

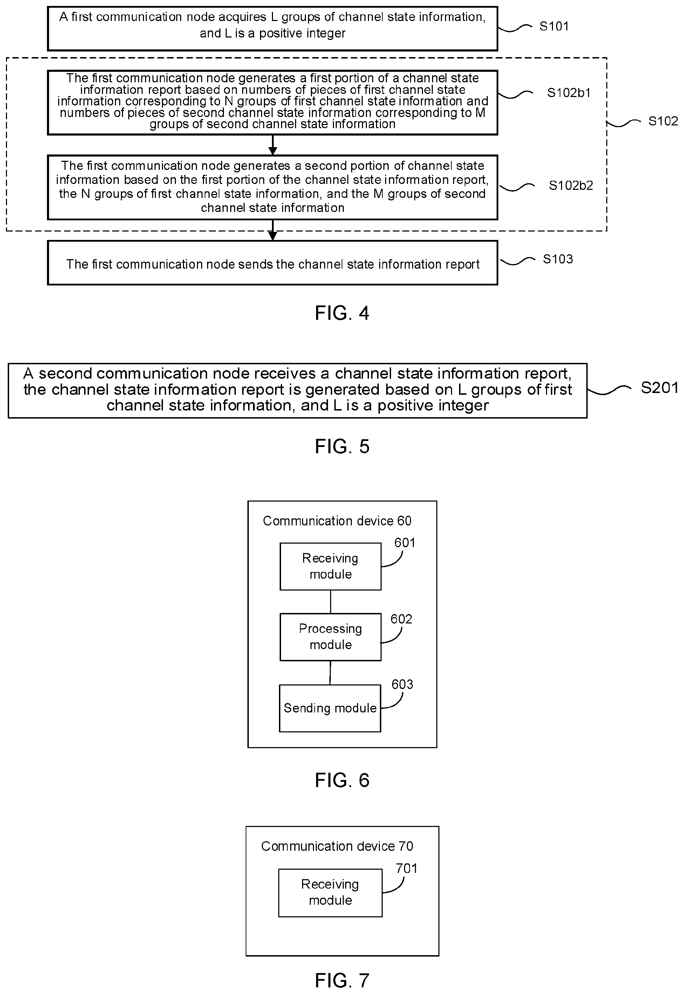

In some embodiments, in a case where the L groups of channel state information meet Example 2 in S101 and include N groups of first channel state information and M groups of second channel state information, as shown in FIG. 4, S102 may be implemented as the following S102b1 and S102b2.

In S102b1, the first communication node generates the first portion of the channel state information report based on the numbers of pieces of first channel state information corresponding to the N groups of first channel state information and the numbers of pieces of second channel state information corresponding to the M groups of second channel state information.

For example, the numbers of pieces of first channel state information corresponding to the N groups of first channel state information may include K₁, ..., K_{N}, respectively, and K₁, ..., K_{N} are all non-negative integers. The numbers of pieces of second channel state information corresponding to the M groups of second channel state information may include K_{1+N}, ..., K_{L}, respectively, and K_{1+N}, ..., K_{L} are all non-negative integers.

In S102b2, the first communication node generates the second portion of the channel state information based on the first portion of the channel state information report, the N groups of first channel state information, and the M groups of second channel state information.

In some embodiments, the first channel state information may include one or more of: a first channel quality parameter, a first resource indicator, and a statistical parameter. The second channel state information may include one or more of: a second channel quality parameter and a second resource indicator.

In some embodiments, the channel state information report further includes at least one of: the number of quantization bits of channel state information, a value of L, a value of N, a value of M, a first bitmap, a second bitmap, a third bitmap, and a group index of channel state information.

The first bitmap is a group mapping diagram of the L groups of channel state information. The first bitmap is used to indicate a transmission status of the L groups of channel state information. For example, a length of the first bitmap is L bits, and the i-th bit is used to indicate whether the i-th group of channel state information has been transmitted. For example, a value of the i-th bit is a first value (e.g., 1), which is used to indicate that the i-th group of channel state information has been transmitted; the value of the i-th bit is a second value (e.g., 0), which is used to indicate that the i-th group of channel state information has not been transmitted.

The second bitmap is a group mapping diagram of the N groups of first channel state information. The second bitmap is used to indicate a transmission status of the N groups of first channel state information. For example, a length of the second bitmap is N, and the i-th bit is used to indicate whether the i-th group of first channel state information has been transmitted. For example, a value of the i-th bit is a first value (e.g., 1), which is used to indicate that the i-th group of first channel state information has been transmitted; the value of the i-th bit is a second value (e.g., 0), which is used to indicate that the i-th group of first channel state information has not been transmitted.

The third bitmap is a group mapping diagram of the M groups of second channel state information. The third bitmap is used to indicate a transmission status of the M groups of second channel state information. For example, a length of the third bitmap is M, and the i-th bit is used to indicate whether the i-th group of second channel state information has been transmitted. For example, a value of the i-th bit is a first value (e.g., 1), which is used to indicate that the i-th group of second channel state information has been transmitted; the value of the i-th bit is a second value (e.g., 0), which is used to indicate that the i-th group of second channel state information has not been transmitted.

In some embodiments, in the case of spatial domain beam prediction, the channel state information report may include the following examples.

In an example, the N groups of first channel state information include K₁ first channel quality parameters, and the M groups of second channel state information include K₂ second channel quality parameters and/or K₂ second resource indicators. The first portion of the channel state information report includes values of K₁ and K₂, and both K₁ and K₂ are positive integers. The second portion of the channel state information report includes K₁ first channel quality parameters, and the second portion of the channel state information report further includes one of the following:
K₂ second channel quality parameters,
K₂ second resource indicators,
K₂ second channel quality parameters and K₂ second resource indicators, and
K₂ second channel quality parameters and a second resource indicator.

For example, in an example where the first channel quality parameter is an L1-RSRP, and the second channel quality parameter is an L1-RSRP and the second resource indicator is a CRI, spatial domain beam prediction is performed on the second communication node side. The first communication node receives and measures reference signal resources in the first reference signal resource set, to obtain beam parameter information including N0 L1-RSRPs. Moreover, the first communication node may determine K₁ L1-RSRPs from the N0 L1-RSRPs. The first communication node may also receive and detect reference signal resources in the second reference signal resource set, to obtain M0 L1-RSRPs and the CRIs corresponding to the M0 L1-RSRPs. Moreover, the first communication node may determine K₂ L1-RSRPs from the M0 L1-RSRPs and the CRIs corresponding to the K₂ L1-RSRPs.

In some embodiments, the first communication node may determine K₁ L1-RSRPs from N0 L1-RSRPs based on a preset first preset L1-RSRP threshold, and all K₁ L1-RSRPs are greater than the first preset L1-RSRP threshold. In addition, the first communication node may also determine K₂ L1-RSRPs from M0 L1-RSRPs based on a preset second preset L1-RSRP threshold, and all K₂ L1-RSRPs are greater than the second preset L1-RSRP threshold.

In some embodiments, the first preset L1-RSRP threshold is equal to the second preset L1-RSRP threshold.

Furthermore, the first portion of the channel state information report includes values of K₁ and K₂, and the second portion of the channel state information report includes K₁ L1-RSRPs, K₂ L1-RSRPs and/or K₂ CRIs.

Alternatively, the second portion of the channel state information report may include K₁ L1-RSRPs, K₂ L1-RSRPs, and a CRI. The one CRI may be the CRI corresponding to the largest L1-RSRP among the K₂ L1-RSRPs. In this case, the value of K₂ is equal to the number of reference signal resources in the second reference signal resource set or the number of beams corresponding to the second reference signal resource set.

It will be noted that, in order to train or monitor the model on the second communication node side, the first communication node may send a plurality of samples to the second communication node. Each sample includes a feature and a label. The feature corresponds to the first channel quality parameter mentioned above, and the label corresponds to the first channel quality parameter mentioned above.

In some embodiments, a maximum value of K₁ is determined based on a received first signaling, and the first signaling includes a higher layer signaling and/or a physical layer signaling. A maximum value of K₂ is determined based on a received second signaling, and the second signaling includes a higher layer signaling and/or a physical layer signaling.

In another example, the N groups of first channel state information include K₁ first resource indicators and/or K₁ first channel quality parameters. The M groups of second channel state information include K₂ second channel quality parameters and/or K₂ second resource indicators. The first portion of the channel state information report includes values of K₁ and K₂, and K₁ and K₂ are positive integers. The second portion of the channel state information report includes one of the following:
K₁ first channel quality parameters,
K₁ first resource instructions,
K₁ first channel quality parameters and K₁ first resource indicators, and
K₁ first channel quality parameters and a first resource indicator.

Moreover, the second portion of the channel state information report further includes one of the following:
K₂ second channel quality parameters,
K₂ second resource indicators,
K₂ second channel quality parameters and K₂ second resource indicators, and
K₂ second channel quality parameters and a second resource indicator.

For example, in an example where the first resource indicator is a CRI and the first channel quality parameter is an L1-RSRP, and the second channel quality parameter is an L1-RSRP and the second resource indicator is a CRI, spatial domain beam prediction is performed on the second communication node side. The first communication node receives and measures reference signal resources in the first reference signal resource set, to obtain beam parameter information including N0 L1-RSRPs and N0 CRIs corresponding to the N0 L1-RSRPs. Moreover, the first communication node may determine K₁ L1-RSRPs from the N0 L1-RSRPs, and determine the CRIs corresponding to the K₁ L1-RSRPs. The first communication node may also receive and detect reference signal resources in the second reference signal resource set, to obtain M0 L1-RSRPs and the CRIs corresponding to the M0 L1-RSRPs. Moreover, the first communication node may determine K₂ L1-RSRPs from M0 L1-RSRPs and the CRIs corresponding to the K₂ L1-RSRPs.

In some embodiments, the first communication node may determine K₁ L1-RSRPs from the N0 L1-RSRPs based on a preset first preset L1-RSRP threshold, and all K₁ L1-RSRPs are greater than the first preset L1-RSRP threshold. In addition, the first communication node may also determine K₂ L1-RSRPs from the M0 L1-RSRPs based on a preset second preset L1-RSRP threshold, and all K₂ L1-RSRPs are greater than the second preset L1-RSRP threshold.

In some embodiments, the first preset L1-RSRP threshold may be equal to the second preset L1-RSRP threshold.

Furthermore, the first portion of the channel state information report includes values of K₁ and K₂, and the second portion of the channel state information report includes any one of K₁ L1-RSRPs, K₁ CRIs, K₁ L1-RSRPs and K₁ CRIs, K₁ L1-RSRPs and a CRI, as well as K₂ L1-RSRPs and/or K₂ CRIs.

It will be noted that in a case where the second portion of the channel state information report includes K₁ L1-RSRPs and a CRI, the one CRI may be the CRI corresponding to the largest L1-RSRP among the K₁ L1-RSRPs. In this case, the value of K₁ is equal to the number of reference signal resources in the first reference signal resource set or the number of beams corresponding to the first reference signal resource set.

In some embodiments, a maximum value of K₁ is determined based on a received first signaling, and the first signaling includes a higher layer signaling and/or a physical layer signaling. A maximum value of K₂ is determined based on a received second signaling, and the second signaling includes a higher layer signaling and/or a physical layer signaling.

In some embodiments, in the case of time domain beam prediction, the channel state information report may include the following examples.

In an example, in the case of time domain beam prediction, the first channel state information includes a first resource indicator and a first channel quality parameter, and the second channel state information includes a second channel quality parameter and/or a second resource indicator. The first portion of the channel state information report includes the numbers of pieces of first channel state information corresponding to N groups of first channel state information, and the numbers of pieces of second channel state information corresponding to M groups of second channel state information. The second portion of the channel state information report includes the first resource indicators and/or first channel quality parameters of pieces of first channel state information in the N groups of first channel state information, and the second resource indicators and/or second channel quality of pieces of second channel state information in the M groups of second channel state information.

For example, the first portion of the channel state information report includes the numbers K₁, ..., K_{N} of pieces of first channel state information corresponding to the N groups of first channel state information, and the numbers K_{1+N}, ..., K_{L} of pieces of second channel state information corresponding to the M groups of second channel state information.

The second portion of the channel state information report includes any one of the following:
K₁ first resource indicators of the first group of channel state information, ..., K_{N} first resource indicators of the N-th group of channel state information, K_{1+N} second channel quality parameters and/or K_{1+N} second resource indicators of the (N+1)-th group of channel state information, ..., K_{L} second channel quality parameters and/or K_{L} second resource indicators of the L-th group of channel state information;
K₁ statistical parameters of the first group of channel state information, ..., K_{N} statistical parameters of the N-th group of channel state information, K_{1+N} second channel quality parameters and/or K_{1+N} second resource indicators of the (N+1)-th group of channel state information, ..., K_{L} second channel quality parameters and/or K_{L} second resource indicators of the L-th group of channel state information; and
K₁ statistical parameters and K₁ first resource indicators of the first group of channel state information, ..., K_{N} statistical parameters and K_{L} first resource indicators of the N-th group of channel state information, K_{1+N} second channel quality parameters and/or K_{1+N} second resource indicators of the (N+1)-th group of channel state information, ..., K_{L} second channel quality parameters and/or K_{L} second resource indicators of the L-th group of channel state information.

In some embodiments, the second portion of the channel state information report may further include K₁ statistical parameters and a first resource indicator of the first group of channel state information, ..., K_{N} statistical parameters and a first resource indicator of the N-th group of channel state information, K_{1+N} second channel quality parameters and/or K_{1+N} second resource indicators of the (N+1)-th group of channel state information, ..., K_{L} second channel quality parameters and/or K_{L} second resource indicators of the L-th group of channel state information.

In an example, in an example where the first channel quality parameter is an L1-RSRP and the first resource indicator is a CRI, and the second channel quality parameter is an L1-RSRP, and the second resource indicator is a CRI, time domain beam prediction is performed on the second communication node side. The first communication node receives and measures reference signal resources in the first reference signal resource set corresponding to each of N first-type slots, to obtain beam parameter information including N0 L1-RSRPs corresponding to each of the N first-type slots. Moreover, the first communication node may also receive and measure reference signal resources in the second reference signal resource set corresponding to each of M second-type slots, to obtain beam parameter information including M0 L1-RSRPs corresponding to each of the M second-type slots. Furthermore, the first communication node may determine K₁, K₂, ..., K_{N} L1-RSRPs from the groups of N0 L1-RSRPs corresponding to the N first-type slots, and the CRIs corresponding to the K₁, K₂, ... K_{N} L1-RSRPs. The first communication node may also determine K_{1+N}, ..., K_{L} L1-RSRPs from the groups of M0 L1-RSRPs corresponding to the M second-type slots, and the CRIs corresponding to the K_{1+N}, ..., K_{L} L1-RSRPs.

In some embodiments, the first communication node may determine K₁, K₂, ..., K_{N} L1-RSRPs from the groups of N0 L1-RSRPs corresponding to the N first-type slots based on a first preset RSRP threshold, and then determine the CRIs corresponding to the K₁, K₂, ..., K_{N} L1-RSRPs. Moreover, the first communication node may also determine K_{1+N}, ..., K_{L} L1-RSRPs from the groups of M0 L1-RSRPs corresponding to the M second-type slots based on a second preset RSRP threshold, and then determine the CRIs corresponding to the K_{1+N}, ..., K_{L} L1-RSRPs. In some embodiments, different first RSRP thresholds may be set for different slots among the N first-type slots, or a same first RSRP threshold may be set for different slots among the N first-type slots. Different second RSRP thresholds may be set for different slots among the M second-type slots, or a same second RSRP threshold may be set for different slots among the M second-type slots. In some embodiments, the first preset L1-RSRP threshold may also be equal to the second preset L1-RSRP threshold.

In some embodiments, the first communication node may determine Kᵢ L1-RSRPs in the i-th first-type slot of the first-type slots corresponding to N detection windows and the CRIs corresponding to the Kᵢ L1-RSRPs, i = 1, ..., N. Moreover, the first communication node may determine Kᵢ L1-RSRPs in the i-th second-type slot of the second-type slots corresponding to M prediction windows, and the CRIs corresponding to the Kᵢ L1-RSRPs, i = (1+N), ..., L.

Furthermore, the first portion of the channel state information report includes values of K₁, K₂, ..., K_{N}, and values of K_{1+N}, ..., K_{L}. The second portion of the channel state information report includes Kᵢ L1-RSRPs in the i-th first-type slot of N first-type slots and the CRIs corresponding to the Kᵢ L1-RSRPs, where i = 1, ..., N, and Kᵢ L1-RSRPs in the i-th second-type slot of M second-type slots and/or the CRIs corresponding to the Kᵢ L1-RSRPs, where i = (1+N), ..., L.

In some embodiments, the first portion of the channel state information report includes values of K₁, K₂, ..., K_{N} and K_{1+N}, ..., K_{L}, and the second portion of the channel state information report includes Kᵢ L1-RSRPs and Kᵢ CRIs in the i-th slot of N first-type slots, and Kᵢ L1-RSRPs and a CRI in the i-th slot of M second-type slots. In a case where the second portion of the channel state information report includes a CRI corresponding to the i-th second-type slot, the one CRI may be the CRI corresponding to the largest L1-RSRP among the Kᵢ L1-RSRPs in the i-th second-type slot. In this case, the value of Kᵢ is equal to the number of reference signal resources in the second reference signal resource set corresponding to the i-th second-type slot or the number of beams corresponding to the second reference signal resource set corresponding to the i-th second-type slot.

Based on the technical solutions provided in the embodiments of the present disclosure, information of the state information report applicable to each usage scenario may be determined based on a variety of usage scenarios related to the training or monitoring of the beam prediction model, thereby improving the flexibility of channel information feedback.

In some embodiments, a channel state information receiving method is also provided in the present disclosure, as shown in FIG. 5, the method includes the following.

In S201, a second communication node receives a channel state information report. The channel state information report is generated based on L groups of first channel state information, and L is a positive integer.

In some embodiments, a first portion of the channel state information report is generated based on the numbers of pieces of first channel state information corresponding to the L groups of first channel state information, and a second portion of the channel state information report is generated based on the first portion of the channel state information report and the L groups of first channel state information.

In some embodiments, the first portion of the channel state information report includes the numbers K₁, ..., K_{L} of pieces of channel state information corresponding to the L groups of channel state information, and/or the second portion of the channel state information report includes the L groups of channel state information.

In some embodiments, spatial domain beam prediction is performed on a second communication node side. That is to say, a spatial domain beam prediction model is deployed on the second communication node side. In this case, the second communication node receives the channel state information report for model inference based on the spatial domain beam prediction model, that is, to obtain a beam prediction result of the spatial domain beam prediction model.

In some embodiments, the second communication node receives the channel state information report and may determine, by decoding the first portion of the channel state information report, the number of pieces of first channel state information (i.e., the number of beams) fed back by the channel state information report, and then sequentially decode the second portion of the channel state information report, to obtain a plurality of pieces of first channel state information.

Furthermore, the second communication node may use first channel state information in the second portion of the channel state information report as the input of the spatial domain beam prediction model, to obtain the beam prediction result of the spatial domain beam prediction model, that is, predicted values of the spatial domain beam prediction model for second channel state information.

In addition, the second communication node may select a suitable parameter value based on a parameter value of channel state information in the beam prediction result, and determine the beam corresponding to the parameter value as the preferred beam.

In an example, the first channel state information includes a first channel quality parameter. The first portion of the channel state information report includes a value of K₁, and K1 is a positive integer. The second portion of the channel state information report includes K₁ first channel quality parameters.

For example, in an example where the first channel quality parameter is an L1-RSRP, the second communication node receives the channel state information report. The second communication node may determine, by decoding the first portion of the channel state information report, the number K1 of pieces of first channel state information fed back by the channel state information report, and then decode the second portion of the channel state information report in sequence, so as to obtain K₁ L1-RSRPs. Furthermore, the second communication node may use the K₁ L1-RSRPs as the input of the spatial domain beam prediction model, to obtain a beam prediction result of the spatial domain beam prediction model, that is, predicted values (e.g., K₂ CRIs, K₂ L1-RSRPs) of the spatial domain beam prediction model for the second beam parameter information. In an example where the beam prediction result includes K₂ L1-RSRPs, the second communication node may further select, based on values of the K₂ L1-RSRPs, the beam corresponding to at least one optimal L1-RSRP as the preferred beam.

In another example, the first channel state information includes a first resource indicator and a first channel quality parameter. The first portion of the channel state information report includes a value of K₁, and K₁ is a positive integer. The second portion of the channel state information report includes any one of: K₁ first channel quality parameters, K₁ first resource indicators, K₁ first channel quality parameters and K₁ first resource indicators, and K₁ first channel quality parameters and a first resource indicator.

For example, in an example where the first channel quality parameter is an L1-RSRP and the first resource indicator is a CRI, the second communication node receives the channel state information report. The second communication node may determine, by decoding the first portion of the channel state information report, the number K₁ of pieces of first channel state information fed back by the channel state information report, and then decode the second portion of the channel state information report in sequence, so as to obtain any one of: K₁ L1-RSRPs, K₁ CRIs, K₁ L1-RSRPs and K₁ CRIs, and K₁ L1-RSRPs and a CRI. Furthermore, in an example where the second communication node receives K₁ L1-RSRPs and K₁ CRIs, the second communication node may use K₁ L1-RSRPs and K₁ CRIs as the input of the spatial domain beam prediction model, to obtain a beam prediction result of the spatial domain beam prediction model, that is, predicted values (e.g., K₂ CRIs, K₂ L1-RSRPs, or L₀ L1-RSRPs) of the spatial domain beam prediction model for the second beam parameter information. In an example where the beam prediction result includes K₂ L1-RSRPs, the second communication node may further select, based on values of the K₂ L1-RSRPs, the beam corresponding to at least one optimal L1-RSRP as the preferred beam.

In some embodiments, spatial domain beam prediction is performed on a first communication node side. That is to say, a spatial domain beam prediction model is deployed on the first communication node side. In this case, the second communication node receives the channel state information report, and the channel state information report includes a beam prediction result of spatial domain beam prediction of the first communication node.

In some embodiments, the second communication node receives the channel state information report. The second communication node may determine, by decoding the first portion of the channel state information report, the number of pieces of first channel state information fed back by the channel state information report, and then sequentially decode the second portion of the channel state information report, to obtain a plurality of pieces of first channel state information. Moreover, the second communication node selects a suitable parameter value based on parameter values of the pieces of first channel state information in the second portion of the channel state information report, and determines the beam corresponding to the parameter value as the preferred beam.

For example, the first channel state information includes a statistical parameter and a first resource indicator. The first portion of the channel state information report includes a value of K₁, and K₁ is a positive integer. The second portion of the channel state information report includes K₁ statistical parameters and/or the first resource indicators corresponding to the K₁ statistical parameters.

In an example where the statistical parameter is a prediction probability and the first resource indicator is a CRI, the second communication node receives the channel state information report. The second communication node may determine, by decoding the first portion of the channel state information report, the number K₁ of pieces of first channel state information fed back by the channel state information report, and then decode the K₁ prediction probabilities and/or the CRIs corresponding to the K₁ prediction probabilities in the channel state information report in sequence.

Furthermore, the second communication node may select at least one suitable prediction probability and/or at least one suitable CRI based on the K₁ prediction probabilities and/or the CRIs corresponding to the K₁ prediction probabilities, and determine the beam corresponding to the at least one prediction probability and/or at least one CRI as the preferred beam.

In some embodiments, the channel state information report may be generated based on L groups of first channel state information and M groups of second channel state information, and L and M are both positive integers.

In some embodiments, the first portion of the channel state information report is generated based on the numbers K₁, ..., K_{N} of pieces of first channel state information corresponding to the L groups of first channel state information, and the numbers K_{1+N}, ..., K_{L} of pieces of the second channel state information corresponding to the M groups of second channel state information; the second portion of the channel state information is generated based on the first portion of the channel state information report, the L groups of first channel state information, and the M groups of second channel state information.

In some embodiments, spatial domain beam prediction is performed on a second communication node side. That is to say, a spatial domain beam prediction model is deployed on the second communication node side. In this case, the second communication node receives the channel state information report for model training and/or model monitoring based on the spatial domain beam prediction model.

In some embodiments, the second communication node receives the channel state information report. The second communication node may determine, by decoding the first portion of the channel state information report, the number of pieces of first channel state information fed back by the channel state information report, and then sequentially decode the second portion of the channel state information report, so as to obtain at least one piece of first channel state information and at least one piece of second channel state information. Furthermore, the second communication node may use the first channel state information in the second portion of the channel state information report as the input of the spatial domain beam prediction model, to obtain a beam prediction result of the spatial domain beam prediction model. The second communication node may compare the beam prediction result with at least one piece of second channel state information, and adjust a model parameter of the spatial domain beam prediction model based on the comparison result and a preset loss function, so as to train the spatial domain beam prediction model. Alternatively, the second communication node determines the performance of the spatial domain beam prediction model based on the comparison result between the beam prediction result and at least one piece of second channel state information, and monitors whether the spatial domain beam prediction model is suitable for the current usage scenario.

In some embodiments, the second communication node may compare a beam prediction result having the largest parameter value with the second channel state information with the largest parameter value, so as to monitor the spatial domain beam prediction model. In an example, if the beam prediction result includes at least one CRI that is the same as the CRI of second channel state information, it indicates that the model is suitable for the current usage scenario.

The foregoing description mainly introduces the solutions provided in the present disclosure from perspective of interaction between a plurality of nodes. It may be understood that, in order to achieve the functions described above, each node includes corresponding hardware structures and/or software modules for executing the plurality of functions. Those skilled in the art will easily realize that the present disclosure may be implemented in the form of hardware or a combination of hardware and computer software, with reference to the algorithm steps of the plurality of examples described in the embodiments disclosed herein. Whether a certain function is performed by hardware or computer software-driven hardware depends on the specific application and design constraints of the technical solutions. Professional technicians may use different methods to implement the described functions, for each specific application, but such implementation will not be considered beyond the scope of the present disclosure.

FIG. 6 is a schematic diagram of components of a communication device provided in embodiments of the present disclosure. As shown in FIG. 6, the communication device 60 includes a receiving module 601, a processing module 602 and a sending module 603.

In some embodiments, the receiving module 601 is configured to acquire L groups of channel state information, and L is a positive integer. The processing module 602 is configured to generate a channel state information report based on the L groups of channel state information. The sending module 603 is configured to send the channel state information report.

In some embodiments, the processing module 602 is configured to: generate a first portion of the channel state information report based on the numbers K₁, ..., K_{L} of pieces of channel state information corresponding to the L groups of channel state information, where K₁, ..., K_{L} are all non-negative integers; and generate a second portion of the channel state information report based on the first portion of the channel state information report and the L groups of channel state information.

In some embodiments, the second portion of the channel state information report is determined based on the first portion of the channel state information report.

In some embodiments, the first portion of the channel state information report includes the numbers K₁, ..., K_{L} of pieces of channel state information corresponding to the L groups of channel state information, and/or the second portion of the channel state information report includes the L groups of channel state information.

In some embodiments, the L groups of channel state information include K₁ first channel quality parameters. The first portion of the channel state information report includes a value of K₁, and K₁ is a positive integer. The second portion of the channel state information report includes K₁ first channel quality parameters.

In some embodiments, the L groups of channel state information include K₁ first resource indicators and/or K₁ first channel quality parameters. The first portion of the channel state information report includes a value of K₁, and K₁ is a positive integer. The second portion of the channel state information report includes any one of the following:
K₁ first channel quality parameters,
K₁ first resource instructions,
K₁ first channel quality parameters and K₁ first resource indicators, and
K₁ first channel quality parameters and a first resource indicator.

In some embodiments, the L groups of channel state information include K₁ statistical parameters and/or K₁ first resource indicators. The first portion of the channel state information report includes a value of K₁, and K₁ is a positive integer. The second portion of the channel state information report includes K₁ statistical parameters and/or the first resource indicators corresponding to the K₁ statistical parameters.

In some embodiments, a maximum value of K₁ is determined based on a received signaling, and the signaling includes a higher layer signaling and/or a physical layer signaling.

In some embodiments, the L groups of channel state information include L groups of first resource indicators and first channel quality parameters. The first portion of the channel state information report includes the numbers K₁, ..., K_{L} of pieces of first channel state information corresponding to the L groups of first channel state information. The second portion of the channel state information report includes any one of the following:
K₁ first channel quality parameters of the first group of channel state information, ..., K_{L} first channel quality parameters of the L-th group of channel state information;
K₁ first resource indicators of the first group of channel state information, ..., K_{L} first resource indicators of the L-th group of channel state information;
K₁ first channel quality parameters and K₁ first resource indicators of the first group of channel state information, ..., K_{L} first channel quality parameters and K_{L} first resource indicators of the L-th group of channel state information; and
K₁ first channel quality parameters and a first resource indicator of the first group of channel state information, ..., K_{L} first channel quality parameters and a first resource indicator of the L-th group of channel state information.

In some embodiments, the L groups of channel state information include L groups of first resource indicators and statistical parameters. The first portion of the channel state information report includes the numbers K₁, ..., K_{L} of pieces of first channel state information corresponding to the L groups of first channel state information. The second portion of the channel state information report includes any one of the following:
K₁ statistical parameters of the first group of channel state information, ..., K_{L} statistical parameters of the L-th group of channel state information;
K₁ first resource indicators of the first group of channel state information, ..., K_{L} first resource indicators of the L-th group of channel state information;
K₁ statistical parameters and K₁ first resource indicators of the first group of channel state information, ..., K_{L} statistical parameters and K_{L} first resource indicators of the L-th group of channel state information; and
K₁ statistical parameters and a first resource indicator of the first group of channel state information, ..., K_{L} statistical parameters and a first resource indicator of the L-th group of channel state information.

In some embodiments, the L groups of first channel state information are obtained from pieces of channel state information in L detection windows.

In some embodiments, the channel state information report further includes at least one of: the number of quantization bits of channel state information, a value of L, a first bitmap, and a group index of channel state information.

In some embodiments, the L groups of channel state information include N groups of first channel state information and M groups of second channel state information, N and M are both positive integers and a sum of N and M is equal to L. The processing module 602 is configured to: generate the first portion of the channel state information report based on the numbers K₁, ..., K_{N} of pieces of first channel state information corresponding to the N groups of first channel state information and the numbers K_{1+N}, ..., K_{L} of pieces of second channel state information corresponding to the M groups of second channel state information; and generate the second portion of the channel state information based on the first portion of the channel state information report, the N groups of first channel state information, and the M groups of second channel state information.

In some embodiments, the N groups of first channel state information include K₁ first channel quality parameters, and the M groups of second channel state information include K₂ second channel quality parameters and/or K₂ second resource indicators. The first portion of the channel state information report includes values of K₁ and K₂, and K₁ and K₂ are both positive integers. The second portion of the channel state information report includes K₁ first channel quality parameters, and the second portion of the channel state information report further includes one of the following:
K₂ second channel quality parameters,
K₂ second resource indicators,
K₂ second channel quality parameters and K₂ second resource indicators, and
K₂ second channel quality parameters and a second resource indicator.

In some embodiments, the N groups of first channel state information include K₁ first resource indicators and/or K₁ first channel quality parameters, and the M groups of second channel state information include K₂ second channel quality parameters and/or K₂ second resource indicators. The first portion of the channel state information report includes values of K₁ and K₂, and K₁ and K₂ are positive integers. The second portion of the channel state information report includes one of the following:
K₁ first channel quality parameters,
K₁ first resource instructions,
K₁ first channel quality parameters and K₁ first resource indicators, and
K₁ first channel quality parameters and a first resource indicator.

Moreover, the second portion of the channel state information report further includes one of the following:
K₂ second channel quality parameters,
K₂ second resource indicators,
K₂ second channel quality parameters and K₂ second resource indicators, and
K₂ second channel quality parameters and a second resource indicator.

In some embodiments, a maximum value of K₁ is determined based on a received first signaling, and a maximum value of K₂ is determined based on a received second signaling.

In some embodiments, the N groups of first channel state information include N groups of first resource indicators and first channel quality parameters, and the M groups of second channel state information include M groups of second channel quality parameters and/or second resource indicators. The first portion of the channel state information report includes the numbers K₁, ..., K_{N} of pieces of first channel state information corresponding to the N groups of first channel state information, and the numbers K_{1+N}, ..., K_{L} of pieces of second channel state information corresponding to the M groups of second channel state information. The second portion of the channel state information report includes any one of the following:
K₁ first resource indicators of the first group of channel state information, ..., K_{N} first resource indicators of the N-th group of channel state information, K_{1+N} second channel quality parameters and/or K_{1+N} second resource indicators of the (N+1)-th group of channel state information, ..., K_{L} second channel quality parameters and/or K_{L} second resource indicators of the L-th group of channel state information;
K₁ statistical parameters of the first group of channel state information, ..., K_{N} statistical parameters of the N-th group of channel state information, K_{1+N} second channel quality parameters and/or K_{1+N} second resource indicators of the (N+1)-th group of channel state information, ..., K_{L} second channel quality parameters and/or K_{L} second resource indicators of the L-th group of channel state information;
K₁ statistical parameters and K₁ first resource indicators of the first group of channel state information, ..., K_{N} statistical parameters and K_{L} first resource indicators of the N-th group of channel state information, K_{1+N} second channel quality parameters and/or K_{1+N} second resource indicators of the (N+1)-th group of channel state information, ..., K_{L} second channel quality parameters and/or K_{L} second resource indicators of the L-th group of channel state information; and
K₁ statistical parameters and a first resource indicator of the first group of channel state information, ..., K_{N} statistical parameters and a first resource indicator of the N-th group of channel state information, K_{1+N} second channel quality parameters and/or K_{1+N} second resource indicators of the (N+1)-th group of channel state information, ..., K_{L} second channel quality parameters and/or K_{L} second resource indicators of the L-th group of channel state information.

In some embodiments, the channel state information report further includes at least one of: the number of quantization bits of channel state information, a value of L, a value of N, a value of M, a first bitmap, a second bitmap, a third bitmap, and a group index of channel state information.

For a more detailed description of the receiving module 601, processing module 602, and sending module 603, as well as a more detailed description of their technical features and beneficial effects, reference may be made to the content of the corresponding method embodiments described above, and details will not be repeated herein.

FIG. 7 is a schematic diagram of components of a communication device provided in embodiments of the present disclosure. As shown in FIG. 7, the communication device 70 includes a receiving module 701.

In some embodiments, the receiving module 701 is configured to receive a channel state information report. The channel state information report is generated based on L groups of channel state information, and L is a positive integer.

In some embodiments, a first portion of the channel state information report includes the numbers K₁, ..., K_{L} of pieces of channel state information corresponding to the L groups of channel state information, and/or a second portion of the channel state information report includes the L groups of channel state information.

In some embodiments, the L groups of channel state information include N groups of first channel state information and M groups of second channel state information. N and M are both positive integers, and a sum of N and M is equal to L.

In some embodiments, the first portion of the channel state information report is generated based on the numbers K₁, ..., K_{N} of pieces of first channel state information corresponding to the N groups of first channel state information, and the numbers K_{1+N}, ..., K_{L} of pieces of second channel state information corresponding to the M groups of second channel state information. The second portion of channel state information is generated based on the first portion of the channel state information report, the N groups of first channel state information, and the M groups of second channel state information.

For a more detailed description of the receiving module 701, as well as a more detailed description of its technical features and beneficial effects, reference may be made to the content of the corresponding method embodiments described above, and details will not be repeated herein.

It will be noted that the modules in FIG. 6 or 7 may also be referred to as units. For example, the sending module may be referred to as a sending unit. In addition, in the embodiments shown in FIG. 6 or 7, each module may also have a name different from the one in the figures. For example, the sending module may also be referred to as a communication module, and the receiving module may also be referred to as a communication module.

If the units or modules in FIG. 6 or 7 are implemented in the form of software functional modules and sold or used as independent products, they may be stored in a computer readable storage medium. Based on such understanding, the technical solutions of the embodiments of the present disclosure may be essentially, or some of the technical solutions of the embodiments of the present disclosure that contribute to some technologies may be, or all or some of the technical solutions may be, embodied in the form of a software product. The computer software product is stored in a storage medium and includes a plurality of instructions for enabling a computer device (e.g., a personal computer, a server, or a network device) or a processor to perform all or some of the steps of the methods as described in the embodiments of the present disclosure. The storage medium for storing the computer software product includes a variety of media capable of storing program codes, such as a U disk (USB flash disk), a mobile hard disk, a read-only memory (ROM), a random access memory (RAM), a magnetic disk, or an optical disk.

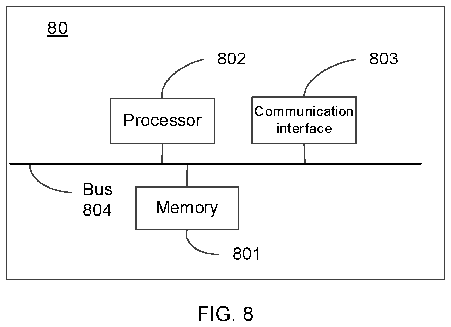

In a case where the functions of the integrated modules are implemented in the form of hardware, the embodiments of the present disclosure provide a schematic diagram showing a structure of a communication device, and the communication device may be the communication device 60 or the communication device 70. As shown in FIG. 8, the communication device 80 includes a memory 801, a processor 802, a communication interface 803, and a bus 804.

The memory 801 may be, but is not limited to, a read-only memory (ROM) or other types of static storage devices capable of storing static information and instructions, a random access memory (RAM) or other types of dynamic storage devices capable of storing information and instructions, or an electrically erasable programmable read-only memory (EEPROM), a magnetic disk storage medium or any other magnetic disk storage device, or any other medium capable of being used to carry or store desired program codes and capable of being accessed by a computer, where the desired program codes have instructions or are in the form of data structure.

The processor 802 may implement or execute a variety of exemplary logical blocks, modules and circuits described with reference to content of the present disclosure. The processor 802 may be a central processing unit, a general-purpose processor, a digital signal processor, an application specific integrated circuit, a field programmable gate array or any other programmable logic device, a transistor logic device, a hardware component, or any combination thereof. The processor 802 may implement or execute a variety of exemplary logical blocks, modules and circuits described with reference to content of the present disclosure. The processor 802 may also be a combination that implements computing functions, for example, a combination of one or more microprocessors, or a combination of a digital signal processor (DSP) and a microprocessor.

The communication interface 803 is configured to connect to other devices through a communication network. The communication network may be an Ethernet, a wireless access network, a wireless local area network (WLAN), or the like.

In some embodiments, the memory 801 may exist independently of the processor 802, and the memory 801 may be connected to the processor 802 through the bus 804 and used for storing instructions or program codes. When calling and executing the instructions or program codes stored in the memory 801, the processor 802 may achieve the information processing mode determination method provided in the embodiments of the present disclosure.

In some embodiments, the memory 801 may also be integrated with the processor 802.

The bus 804 may be an extended industry standard architecture (EISA) bus, or the like. The bus 804 may be classified as an address bus, a data bus, and a control bus. For ease of representation, only one bold line is used in FIG. 8, but it does not mean that there is only one bus or one type of bus.

From description of the embodiments described above, those skilled in the art may clearly understand that, for the convenience and brevity of description, an example is only given according to the division of functional modules described above. In practical applications, the functions described above may be allocated to different functional modules as needed, that is, the internal structure of the device or apparatus is divided into different functional modules to complete all or some of the functions described above.

A computer readable storage medium is further provided in the embodiments of the present disclosure. All or some of the processes in the method embodiments described above may be implemented by using computer instructions to control related hardware. The program may be stored in the computer readable storage medium. When the program is executed, it may include processes as described in the method embodiments described above. The computer readable storage medium may be an internal storage unit (e.g., a hard disk or memory of a computer device) of the device or apparatus provided in any one of the embodiments described above. The computer readable storage medium may also be an external storage device of the device or apparatus, such as a plug-in hard disk, a smart media card (SMC), a secure digital (SD) card, a flash card, equipped on the device or apparatus. Furthermore, the computer readable storage medium may also include both an internal storage unit of the device or apparatus and the external storage device. The computer readable storage medium is configured to store the computer program mentioned above and other programs and data required by the device or apparatus. The computer readable storage medium may also be used to temporarily store data that has been output or is to be output. The computer readable storage medium includes a non-transitory computer readable storage medium.

A computer program product is further provided in the embodiments of the present disclosure. The computer product includes a computer program. When the computer program product is run on a computer, the computer program product enables the computer to perform any one of methods provided in the embodiments mentioned above.

Although the present disclosure has been described herein in conjunction with the plurality of embodiments, other variations of the disclosed embodiments may be understood and achieved by those skilled in the art by viewing the accompanying drawings, the disclosed content, and the claims as provided, during the implementation of the present disclosure for which protection is claimed. In the claims, the word "comprise/comprises/comprising/include/includes/including" does not exclude other components or steps, and "a/an" or "one" does not exclude a case of multiple. A single processor or other units may achieve several functions listed in the claims. A fact that some solutions are recorded in dependent claims different from each other does not mean that these solutions cannot be combined to exert a good effect.

Although the present disclosure has been described in conjunction with specific features and embodiments thereof, it will be apparent that a variety of modifications and combinations may be made thereto without departing from the spirit and scope of the present disclosure. Correspondingly, the specification and drawings are merely illustrative examples of the present disclosure as defined by the appended claims and are deemed to cover any and all modifications, variations, combinations or equivalents within the scope of the present disclosure. Obviously, those skilled in the art may make a variety of changes and modifications to the present disclosure without departing from the spirit and scope of the present disclosure. In this way, if these modifications and variations of the present disclosure fall within the scope of the claims of the present disclosure and their equivalent technologies, the present disclosure is also intended to include these modifications and variations.

The above are merely specific implementations of the present disclosure, but the protection scope of the present disclosure is not limited thereto, and any variations or replacements within the technical scope of the present disclosure shall fall within the protection scope of the present disclosure. Therefore, the protection scope of the present disclosure shall be subject to the protection scope of the claims.

## Claims

1. A channel state information sending method, comprising:
acquiring L groups of channel state information, wherein L is a positive integer;
generating a channel state information report based on the L groups of channel state information; and
sending the channel state information report.

2. The method according to claim 1, wherein the generating the channel state information report based on the L groups of channel state information, includes:
generating a first portion of the channel state information report based on numbers K₁, ..., K_{L} of pieces of channel state information corresponding to the L groups of channel state information; wherein K₁, ..., K_{L} are all non-negative integers; and
generating a second portion of the channel state information report based on the first portion of the channel state information report and the L groups of channel state information.

3. The method according to claim 2, wherein the second portion of the channel state information report is determined based on the first portion of the channel state information report.

4. The method according to claim 2, wherein the first portion of the channel state information report includes the numbers K₁, ..., K_{L} of pieces of channel state information corresponding to the L groups of channel state information, and/or the second portion of the channel state information report includes the L groups of channel state information.

5. The method according to claim 2, wherein the L groups of channel state information include K₁ first channel quality parameters; the first portion of the channel state information report includes a value of K₁, and K₁ is a positive integer; and the second portion of the channel state information report includes the K₁ first channel quality parameters.

6. The method according to claim 2, wherein the L groups of channel state information include K₁ first resource indicators and/or K₁ first channel quality parameters; the first portion of the channel state information report includes a value of K₁, and K₁ is a positive integer; the second portion of the channel state information report includes any one of the following:
the K₁ first channel quality parameters,
the K₁ first resource indicators,
the K₁ first channel quality parameters and the K₁ first resource indicators, and
the K₁ first channel quality parameters and a first resource indicator.

7. The method according to claim 2, wherein the L groups of channel state information include K₁ statistical parameters and/or K₁ first resource indicators; the first portion of the channel state information report includes a value of K₁, and K₁ is a positive integer; the second portion of the channel state information report includes: the K₁ statistical parameters and/or the first resource indicators corresponding to the K₁ statistical parameters.

8. The method according to claim 7, wherein a maximum value of K₁ is determined based on a received signaling, the signaling includes a higher layer signaling and/or a physical layer signaling.

9. The method according to claim 2, wherein the L groups of channel state information include L groups of first resource indicators and first channel quality parameters; the first portion of the channel state information report includes numbers K₁, ..., K_{L} of pieces of first channel state information corresponding to L groups of first channel state information; the second portion of the channel state information report includes any one of the following:
K₁ first channel quality parameters of a first group of channel state information, ..., K_{L} first channel quality parameters of an L-th group of channel state information;
K₁ first resource indicators of the first group of channel state information, ..., K_{L} first resource indicators of the L-th group of channel state information;
the K₁ first channel quality parameters and the K₁ first resource indicators of the first group of channel state information, ..., the K_{L} first channel quality parameters and the K_{L} first resource indicators of the L-th group of channel state information; and
the K₁ first channel quality parameters and a first resource indicator of the first group of channel state information, ..., the K_{L} first channel quality parameters and a first resource indicator of the L-th group of channel state information.

10. The method according to claim 2, wherein the L groups of channel state information include L groups of first resource indicators and statistical parameters; the first portion of the channel state information report includes numbers K₁, ..., K_{L} of pieces of first channel state information corresponding to L groups of first channel state information; the second portion of the channel state information report includes any one of the following:
K₁ statistical parameters of a first group of channel state information, ..., K_{L} statistical parameters of an L-th group of channel state information;
K₁ first resource indicators of the first group of channel state information, ..., K_{L} first resource indicators of the L-th group of channel state information;
K₁ second channel quality parameter statistical parameters and the K₁ first resource indicators of the first group of channel state information, ..., the K_{L} statistical parameters and the K_{L} first resource indicators of the L-th group of channel state information; and
the K₁ statistical parameters and a first resource indicator of the first group of channel state information, ..., the K_{L} statistical parameters and a first resource indicator of the L-th group of channel state information.

11. The method according to claim 2, wherein the channel state information report further includes at least one of: a number of quantization bits of channel state information, a value of L, a first bit map, and a group index of channel state information.

12. The method according to claim 1, wherein the L groups of channel state information include N groups of first channel state information and M groups of second channel state information, N and M are both positive integers, and a sum of N and M is equal to L; the generating the channel state information report based on the L groups of channel state information, includes:
generating a first portion of the channel state information report based on numbers K₁, ..., K_{N} of pieces of first channel state information corresponding to the N groups of first channel state information, and numbers K_{1+N}, ..., K_{L} of pieces of second channel state information corresponding to the M groups of second channel state information; and
generating a second portion of channel state information based on the first portion of the channel state information report, the N groups of first channel state information, and the M groups of second channel state information.

13. The method according to claim 12, wherein the N groups of first channel state information include K₁ first channel quality parameters, and the M groups of second channel state information include K₂ second channel quality parameters and/or K₂ second resource indicators;
the first portion of the channel state information report includes values of K₁ and K₂, and both K₁ and K₂ are positive integers; and
the second portion of the channel state information report includes the K₁ first channel quality parameters, and the second portion of the channel state information report further includes one of: the K₂ second channel quality parameters, the K₂ second resource indicators, the K₂ second channel quality parameters and the K₂ second resource indicators, and the K₂ second channel quality parameters and a second resource indicator.

14. The method according to claim 12, wherein the N groups of first channel state information include K₁ first resource indicators and/or K₁ first channel quality parameters; the M groups of second channel state information include K₂ second channel quality parameters and/or K₂ second resource indicators;
the first portion of the channel state information report includes values of K₁ and K₂, and K₁ and K₂ are positive integers; and
the second portion of the channel state information report includes one of: the K₁ first channel quality parameters, the K₁ first resource indicators, the K₁ first channel quality parameters and the K₁ first resource indicators, the K₁ first channel quality parameters and a first resource indicator; the second portion of the channel state information report further includes one of: the K₂ second channel quality parameters, the K₂ second resource indicators, the K₂ second channel quality parameters and the K₂ second resource indicators, the K₂ second channel quality parameters and a second resource indicator.

15. The method according to claim 12, wherein the N groups of first channel state information include N groups of first resource indicators and/or first channel quality parameters; the M groups of second channel state information include M groups of second channel quality parameters and/or second resource indicators;
the first portion of the channel state information report includes numbers K₁, ..., K_{N} of pieces of first channel state information corresponding to the N groups of first channel state information, and numbers K_{1+N}, ..., K_{L} of pieces of second channel state information corresponding to the M groups of second channel state information;
the second portion of the channel state information report includes any one of the following:
K₁ first resource indicators of a first group of channel state information, ..., K_{N} first resource indicators of an N-th group of channel state information, K_{1+N} second channel quality parameters and/or K_{1+N} second resource indicators of an (N+1)-th group of channel state information, ..., K_{L} second channel quality parameters and/or K_{L} second resource indicators of an L-th group of channel state information;
K₁ statistical parameters of the first group of channel state information, ..., K_{N} statistical parameters of the N-th group of channel state information, the K_{1+N} second channel quality parameters and/or the K_{1+N} second resource indicators of the (N+1)-th group of channel state information, ..., the K_{L} second channel quality parameters and/or the K_{L} second resource indicators of the L-th group of channel state information;
the K₁ statistical parameters and the K₁ first resource indicators of the first group of channel state information, ..., the K_{N} statistical parameters and K_{L} first resource indicators of the N-th group of channel state information, the K_{1+N} second channel quality parameters and/or the K_{1+N} second resource indicators of the (N+1)-th group of channel state information, ..., the K_{L} second channel quality parameters and/or the K_{L} second resource indicators of the L-th group of channel state information; and
the K₁ statistical parameters and a first resource indicator of the first group of channel state information, ..., the K_{N} statistical parameters and a first resource indicator of the N-th group of channel state information, the K_{1+N} second channel quality parameters and/or the K_{1+N} second resource indicators of the (N+1)-th group of channel state information, ..., the K_{L} second channel quality parameters and/or the K_{L} second resource indicators of the L-th group of channel state information.

16. The method according to claim 12, wherein the channel state information report further includes at least one of: a number of quantization bits of channel state information, a value of L, a value of N, a value of M, a first bitmap, a second bitmap, a third bitmap, and a group index of channel state information.

17. A channel state information receiving method, comprising:
receiving a channel state information report, wherein the channel state information report is generated based on L groups of channel state information, and L is a positive integer.

18. The method according to claim 17, wherein a first portion of the channel state information report includes numbers K₁, ..., K_{L} of pieces of channel state information corresponding to the L groups of channel state information, and/or a second portion of the channel state information report includes the L groups of channel state information.

19. The method according to claim 17, wherein the L groups of channel state information include N groups of first channel state information and M groups of second channel state information, N and M are both positive integers, and a sum of N and M is equal to L.

20. The method according to claim 19, wherein a first portion of the channel state information report is generated based on numbers K₁, ..., K_{N} of pieces of first channel state information corresponding to the N groups of first channel state information, and numbers K_{1+N}, ..., K_{L} of pieces of second channel state information corresponding to the M groups of second channel state information; and
a second portion of channel state information is generated based on the first portion of the channel state information report, the N groups of first channel state information, and the M groups of second channel state information.

21. A communication device, comprising a memory and a processor, wherein the memory is coupled to the processor, the memory is configured to store instructions executable by the processor; upon executing the instructions, the processor performs the method according to any one of claims 1 to 20.

22. A computer readable storage medium, wherein the computer readable storage medium has stored computer instructions that, upon run on a communication device, enable the communication device to perform the method according to any one of claims 1 to 20.
